# EUROPEAN PATENT SPECIFICATION

(11) **EP 4 446 622 B1**
(45) Date of publication and mention of the grant of the patent: **01.04.2026**
(21) Application number: 22907550.2
(22) Date of filing: 16.12.2022
(51) Int. Cl.: F16H 61/04, F16H 61/682, F16H 63/46, F16H 63/50, B60W 10/02, B60W 10/06, B60W 30/19

(54) **VEHICLE**
FAHRZEUG
VÉHICULE

(30) Priority: 17.12.2021 WO PCT/JP2021/046808
(43) Date of publication of application: 16.10.2024
(73) Proprietor: Yamaha Hatsudoki Kabushiki Kaisha, Shizuoka 4388501 (JP)
(72) Inventor: MINAMI, Kengo, Iwata-shi, Shizuoka 438-8501 (JP); TAMEMASA, Takuma, Iwata-shi, Shizuoka 438-8501 (JP)
(74) Representative: Stöckeler, Ferdinand
(86) International application number: PCT/JP2022/046523
(87) International publication number: WO 2023/113028

(56) References cited:
- JP-A- 2014 202 331
- JP-A- 2014 202 331
- JP-A- 2015 027 853
- JP-A- 2018 071 748
- US-A1- 2004 214 687
- US-A1- 2009 270 224

## Description

### TECHNICAL FIELD

The present invention relates to a vehicle equipped with a speed change control device.

### BACKGROUND ART

Conventionally, there is a known speed change control device that includes a so-called dog-type speed change device and performs a series of speed change actions by an actuator. Specifically, there is a known speed change control device that performs a series of speed change actions using an actuator, such as an electric motor. The series of speed change actions includes disconnecting a clutch, changing a gear position of a speed change device, and connecting the clutch.

In the technology disclosed in Patent Literature 1, when a speed change control device is given a speed change request to a non-synchronous stage, the speed change control device disengages an idling gear of a stage of speed before being changed and a corresponding sleeve. Thus, the speed change control device realizes a neutral stage. Thereafter, in a state where a clutch torque Tc is maintained at a value T1 (a joined state of a clutch), an engine torque Te is adjusted such that a rotation speed Ni of an input shaft of a transmission is adjusted to match a "synchronous rotation speed." The value T1 is larger than the engine torque Te. In a state where synchronization of the rotation speed Ni of the input shaft of the transmission with the "synchronous rotation speed" is maintained, the clutch torque Tc is reduced to a value T2. The value T2 is a value equal to or smaller than a torque corresponding to an upper limit of an allowable range for speed change shock. In a state where the clutch torque Tc is maintained at the value T2, the speed change control device engages a sleeve corresponding to a stage of speed after being changed and an idling gear of the stage of speed after being changed. Further, Patent Literature 1 discloses a technology in which the engine torque Te and the clutch torque Tc increase/recover when the sleeve reaches a completion position of engagement with the idling gear of the stage of speed.

### Citation List

### Patent Literature

[Patent Literature 1] Japanese Unexamined Patent Application Publication No. 2014-202331

### SUMMARY OF THE INVENTION

### Technical Problem

In the technology disclosed in Patent Literature 1, in the state where synchronization of the rotation speed Ni of the input shaft of the transmission with the "synchronous rotation speed" is maintained through adjustment of the engine torque Te, the sleeve corresponding to the stage of speed after being changed and the idling gear after the speed change are engaged. The engine torque Te is increased after completion of the engagement. Thus, a problem occurs in that a driving force delays in rising after the end of the speed change.

An object of the present invention is to provide a vehicle that can raise/increase a driving force after the end of a speed change by putting a clutch in a partially connected state and increasing a torque of a motive power source before the completion of engagement between a driving dog and a driven dog such that a high torque is transmitted from the motive power source to a drive shaft through the clutch after the completion of the engagement.

### Solution to Problem

The present invention is a vehicle equipped with a dog clutch-type speed change device including: a clutch that is configured to, in a fully connected state, transmit a torque from a motive power source to a main shaft as a clutch friction member is pressed, in a partially connected state, transmit the torque as the clutch friction member is pressed with a pressing force lower than a pressing force in the fully connected state, and in a disconnected state, interrupt the torque transmission from the motive power source to the main shaft; a clutch actuator that is configured to control the clutch and changes the state of the clutch; a transmission that is configured to engage a driving dog and a driven dog by causing the driving dog and the driven dog to be closer to each other and disengages the driving dog and the driven dog by causing the driving dog and the driven dog to be apart from each other, and thus switches gears that transmit the torque between the main shaft and a drive shaft; a motive power source-torque adjustment device that is configured to adjust the torque of the motive power source; and a control device that is configured to control the clutch actuator and the motive power source-torque adjustment device, wherein the control device is configured to, while causing the driving dog and the driven dog to be closer to each other from a disengaged state to an engaged state, control the clutch actuator so as to put the clutch in the partially connected state and control the motive power source-torque adjustment device so as to increase the torque of the motive power source, such that the torque is transmitted from the motive power source to the drive shaft when the disengaged driving dog and driven dog are engaged later, whereby a front-rear acceleration of the vehicle after the disengaged driving dog and driven dog are engaged becomes higher than a front-rear acceleration of the vehicle at a point when a speed change command is generated.

In the above-described configuration, the control device may be configured to, after the driving dog and the driven dog are engaged, control the clutch actuator so as to maintain the partially connected state of the clutch and control the motive power source-torque adjustment device so as to retain the increased torque of the motive power source, whereby the front-rear acceleration of the vehicle after the disengaged driving dog and driven dog are engaged is retained in a state of being higher than the front-rear acceleration of the vehicle at the point when the speed change command is generated.

In the above-described configuration, the control device may be configured to, after the driving dog and the driven dog are engaged, control the clutch actuator so as to maintain the partially connected state of the clutch and then put the clutch in the fully connected state and control the motive power source-torque adjustment device so as to maintain the increased torque of the motive power source and then further increase the torque of the motive power source, whereby a speed of the vehicle that has decreased after the speed change command is generated is increased by the increased front-rear acceleration of the vehicle after the disengaged driving dog and driven dog are engaged.

In the above-described configuration, the dog clutch-type speed change device may include a shift actuator that is controlled by the control device and is configured to perform a speed change of the transmission. The control device may be configured to, while controlling the shift actuator so as to cause the driving dog and the driven dog to be closer to each other from the disengaged state to the engaged state continuously without a temporary stop, control the clutch actuator so as to put the clutch in the partially connected state and control the motive power source-torque adjustment device so as to increase the torque of the motive power source, such that the torque is transmitted from the motive power source to the drive shaft when the disengaged driving dog and driven dog are engaged later, whereby the front-rear acceleration of the vehicle after the disengaged driving dog and driven dog are engaged becomes higher than the front-rear acceleration of the vehicle at the point when the speed change command is generated.

In the above-described configuration, in a case where a driving state of the motive power source when a shift command is generated is a state of outputting a positive torque, the control device may be configured to, while causing the driving dog and the driven dog to be closer to each other from the disengaged state to the engaged state, control the clutch actuator so as to put the clutch in the partially connected state and control the motive power source-torque adjustment device so as to increase the torque of the motive power source, such that the torque is transmitted from the motive power source to the drive shaft when the disengaged driving dog and driven dog are engaged later, whereby the front-rear acceleration of the vehicle after the disengaged driving dog and driven dog are engaged becomes higher than the front-rear acceleration of the vehicle at the point when the speed change command is generated.

In the above-described configuration, when driving states of the motive power source are defined as a low-speed, low-torque state where a speed or an output torque of the motive power source is low, and a high-speed, high-torque state where the speed or the torque is high relative to that in the low-speed, low-torque state, in a case where the driving state of the motive power source when an upshift command is generated is the high-speed, high-torque state or a case where the driving state of the motive power source when a downshift command is generated is a state of outputting a positive torque, the control device may be configured to, while causing the driving dog and the driven dog to be closer to each other from the disengaged state to the engaged state, control the clutch actuator so as to put the clutch in the partially connected state and control the motive power source-torque adjustment device so as to increase the torque of the motive power source, such that the torque is transmitted from the motive power source to the drive shaft when the disengaged driving dog and driven dog are engaged later, whereby the front-rear acceleration of the vehicle after the disengaged driving dog and driven dog are engaged becomes higher than the front-rear acceleration of the vehicle at the point when the speed change command is generated.

In the above-described configuration, the control device may be configured to, when disengaging the driving dog and the driven dog according to generation of the speed change command, control the motive power source-torque adjustment device so as to reduce the torque of the motive power source, and to, while causing the driving dog and the driven dog to be closer to each other from the disengaged state to the engaged state, control the clutch actuator so as to put the clutch in the partially connected state and control the motive power source-torque adjustment device so as to increase the torque of the motive power source, such that the torque is transmitted from the motive power source to the drive shaft when the disengaged driving dog and driven dog are engaged later, whereby the front-rear acceleration of the vehicle after the disengaged driving dog and driven dog are engaged becomes higher than the front-rear acceleration of the vehicle at the point when the speed change command is generated.

### Advantageous Effects of the Invention

The present invention can achieve an early increase in the driving force after the completion of engagement between the driving dog and the driven dog by putting the clutch in the partially connected state and increasing the torque of the motive power source before the completion of the engagement such that, after the completion of the engagement, a high torque is transmitted from the motive power source to the drive shaft through the clutch to cause a high front-rear acceleration in the vehicle.

### BRIEF DESCRIPTION OF THE DRAWINGS

[FIG. 1] FIG. 1 is a view illustrating an overview of a vehicle and a speed change action according to an embodiment.
[FIG. 2] FIG. 2 is a side view of a motorcycle according to the embodiment.
[FIG. 3] FIG. 3 is a sectional view showing the internal configuration of a power unit.
[FIG. 4] FIG. 4 is a perspective view showing speed change gears constituting parts of a transmission.
[FIG. 5] FIG. 5 is a functional block diagram showing the configuration of a speed change control device.
[FIG. 6] FIG. 6 is an explanatory view illustrating actions of disengaging a driving dog and a driven dog from each other and engaging the driving dog and the driven dog with each other.
[FIG. 7] FIG. 7 is an explanatory view illustrating a state when partial engagement between the driving dog and the driven dog has occurred.
[FIG. 8] FIG. 8 is a view showing a clutch command value, an actual clutch position, a required engine torque, a shift cam angle, a front-rear acceleration, an amount of pitching, an engine speed, a main shaft rotation speed, a drive shaft rotation speed, and an input torque to a transmission in a case where a speed change command for an upshift is generated when a motive power source is in a high-speed, high-torque state.
[FIG. 9] FIG. 9 is a view showing the clutch command value, the actual clutch position, the required engine torque, the shift cam angle, the front-rear acceleration, the amount of pitching, the engine speed, the main shaft rotation speed, the drive shaft rotation speed, and the input torque to the transmission in a case where a speed change command for a downshift is generated when the motive power source is in a driving state.
[FIG. 10] FIG. 10 is a view showing conventional clutch command value, actual clutch position, required engine torque, shift cam angle, front-rear acceleration, amount of pitching, engine speed, main shaft rotation speed, drive shaft rotation speed, and input torque to a transmission in a case where a speed change command for an upshift is generated.

### MODES FOR CARRYING OUT THE INVENTION

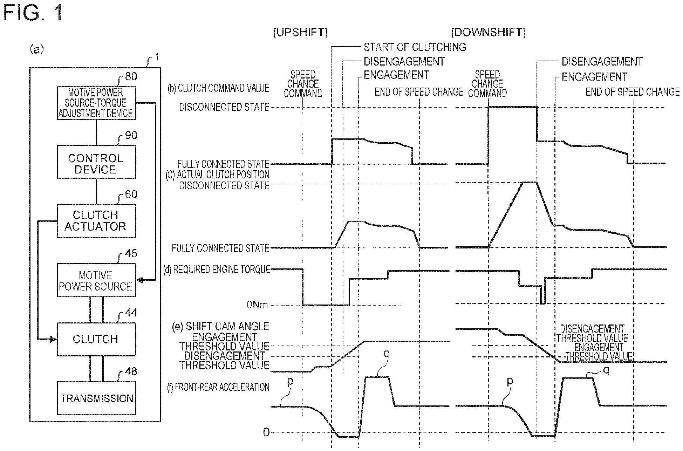

An embodiment of the present invention will be described below with reference to the drawings. FIG. 1 is a view illustrating an overview of a speed change action of a vehicle 1 according to the embodiment. As shown in FIG. 1 (a), the vehicle 1 has a clutch 44, a motive power source 45, a transmission 48, a clutch actuator 60, a motive power source-torque adjustment device 80, and a control device 90.

The vehicle 1 travels on motive power of the motive power source 45. For example, the motive power source 45 is an internal combustion engine that uses gasoline as fuel. However, the type of the motive power source 45 is not particularly limited. The motive power source may be a motor or the like other than an internal combustion engine such as a gasoline engine. A gasoline engine and a motor may be combined to constitute a motive power source.

The vehicle 1 has the transmission 48. The vehicle 1 can change speed by switching gears of the transmission 48. Each gear of the transmission 48 has a different gear ratio. The vehicle 1 has a main shaft and a drive shaft. The main shaft rotates by receiving a torque from the motive power source 45 through the clutch 44. The drive shaft applies a driving torque to the vehicle 1. The transmission 48 switches gears that transmit the torque between the main shaft and the drive shaft. The gears include low-speed gears and high-speed gears. In the vehicle 1, an upshift of changing the speed from a low-speed gear to a high-speed gear, and a downshift of changing the speed from a high-speed gear to a low-speed gear are performed.

The clutch 44 is configured to transmit and interrupt the torque between the motive power source 45 and the main shaft. Connection states of the clutch 44 include a fully connected state, a partially connected state, and a disconnected state. When the clutch 44 is in the fully connected state, the torque is transmitted from the motive power source 45 to the main shaft as clutch friction members are pressed. When the clutch 44 is in the partially connected state, the torque is transmitted from the motive power source 45 to the main shaft as the clutch friction members are pressed with a pressing force that is lower than a pressing force when the clutch 44 is in the fully connected state. When the clutch 44 is in the disconnected state, the torque transmission from the motive power source 45 to the main shaft is interrupted.

When a speed change is performed, the clutch actuator 60 is configured to switch the state of the clutch 44 to the fully connected state, the partially connected state, or the disconnected state. The motive power source-torque adjustment device 80 is configured to adjust the torque of the motive power source 45 when a speed change is performed. When a speed change is performed, the control device 90 is configured to perform control of the clutch 44 through the clutch actuator 60. When a speed change is performed, the control device 90 is configured to perform control of the motive power source 45 through the motive power source-torque adjustment device 80.

Next, actions when the vehicle 1 performs a speed change will be described. First, an upshift of changing the speed from a low-speed gear to a high-speed gear will be described. When a speed change command for an upshift is generated, the control device 90 controls the clutch actuator 60 so as to maintain the clutch 44 in the fully connected state (see FIG. 1 (b)). In addition, the control device 90 controls the motive power source-torque adjustment device 80 so as to start reducing the torque of the motive power source 45 (see FIG. 1 (d)). Thus, a front-rear acceleration of the vehicle 1 decreases gradually. The front-rear acceleration refers to an acceleration in an advancing direction (front-rear direction) of the vehicle 1.

Thereafter, a command value for the clutch 44 is switched from the fully connected state to the partially connected state (start of clutching). Then, as a driving dog moves, the driving dog and a driven dog of the low-speed gear are disengaged. Next, the driving dog enters an engaged state with a driven dog of the high-speed gear. While the driving dog disengaged from the driven dog of the low-speed gear is moving toward the driven dog of the high-speed gear, the control device 90 maintains the command value of the clutch 44 as the partially connected state. Thus, the control device 9 controls the clutch actuator 60. Further, the control device 9 controls the motive power source-torque adjustment device 80 so as to increase the torque of the motive power source 45.

When the driving dog and the driven dog of the high-speed gear engage, slippage occurs in the clutch 44 and a state of kinetic friction coefficient arises, so that the torque increased by the torque of the motive power source 45 and the pressing force of the clutch that have been set in advance is transmitted to the main shaft and output through the dogs. Owing to this increased torque, the front-rear acceleration of the vehicle 1 rises quickly (see FIG. 1 (f)).

Next, a downshift of changing the speed from a high-speed gear to a low-speed gear when the motive power source 45 is in a state of outputting a positive torque will be described. When a speed change command for a downshift is generated, the control device 90 controls the clutch actuator 60 so as to start disconnection control of the clutch 44 (see FIG. 1 (b)). The control device 90 controls the motive power source-torque adjustment device 80 so as to start reducing the torque of the motive power source 45 (see FIG. 1 (d)). Thus, the front-rear acceleration of the vehicle 1 decreases gradually.

Thereafter, when the driving dog is disengaged from the driven dog of the high-speed gear, the control device 90 switches the command value for the clutch 44 from the disconnected state to the partially connected state. While the driving dog is moving toward the driven dog of the low-speed gear, the control device 90 maintains the command value for the clutch 44 as the partially connected state. Thus, the control device 90 controls the clutch actuator 60. Further, the control device 90 controls the motive power source-torque adjustment device 80 so as to increase the torque of the motive power source 45.

When the driving dog and the driven dog of the low-speed gear engage, slippage occurs in the clutch 44 and a state of kinetic friction coefficient arises, so that the torque increased by the torque of the motive power source 45 and the pressing force of the clutch that have been set in advance is transmitted to the main shaft and output through the dogs. Owing to this increased torque, the front-rear acceleration of the vehicle rises quickly (see FIG. 1 (f)).

In this way, in the vehicle 1 of this embodiment, the driving dog and the driven dog have been caused to be closer to each other from the disengaged state to the engaged state such that the torque is transmitted from the motive power source 45 to the drive shaft when the disengaged driving dog and driven dog are engaged later. While the driving dog and the driven dog are caused to be closer to each other, the control device 90 controls the clutch actuator 60 so as to put the clutch 44 in the partially connected state. Moreover, the control device 90 controls the motive power source-torque adjustment device 80 so as to increase the torque of the motive power source 45. Thus, in this configuration, the front-rear acceleration of the vehicle 1 after the disengaged driving dog and driven dog are engaged becomes higher than the front-rear acceleration of the vehicle 1 at the point when a speed change command is generated. It is immediately after the driving dog and the driven dog are engaged that a high front-rear acceleration occurs. However, the present invention is not limited to being implemented immediately after the engagement but may be implemented at the same time as the engagement or after the engagement. In this embodiment, the speed change mechanism that changes the speed by moving the driving dog has been described. However, the speed change mechanism may perform a speed change by moving the driven dog so as to realize disengagement from and engagement with the driving dog. In this embodiment, the speed change mechanism that performs a speed change by moving one driving dog has been described. However, in this embodiment, the speed change mechanism may perform a speed change by using a plurality of driving dogs. For example, the speed change mechanism may perform a speed change by disengaging a first driving dog and a first driven dog on a low-speed side and engaging a second driving dog and a second driven dog on a high-speed side.

Next, the vehicle 1 will be specifically described. As the vehicle 1, other than a so-called four-wheel automobile, a snowmobile, an all-terrain vehicle (ATV), and a saddle-riding type automobile such as a motorcycle are included. The type of the vehicle 1 is not particularly limited as long as the above-described speed change action is performed. In the following, the description will be continued by taking as an example a case where the vehicle 1 is a motorcycle.

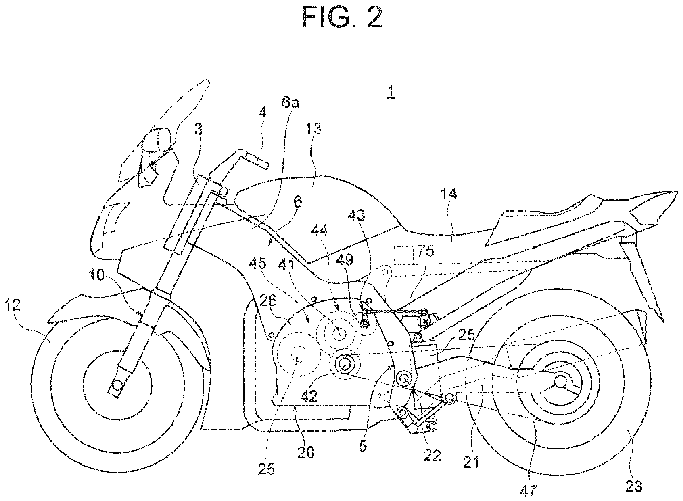

FIG. 2 is a side view showing a motorcycle 2. As shown in FIG. 2, the motorcycle 2 includes a head pipe 3 and a vehicle body frame 6. The vehicle body frame 6 has two frame parts 6a that are a left-right pair and extend rearward from the head pipe 3. In FIG. 2, only one of the frame parts 6a is shown. A rear portion of the frame part 6a extends downward and connects to a rear arm bracket 5. The rear arm bracket 5 supports a front end portion of a rear arm 21 through a pivot shaft 22 so as to be able to swing up and down. At a rear end portion of the rear arm 21, a rear wheel 23 is supported.

A front fork 10 is pivotably supported on the head pipe 3. At an upper end of the front fork 10, a steering handlebar 4 is provided. At a lower end of the front fork 10, a front wheel 12 is rotatably provided. On upper portions of the frame parts 6a, a fuel tank 13 is disposed. At a rear side of the fuel tank 13, a seat 14 is disposed.

A power unit 20 is suspended on the frame parts 6a and the rear arm bracket 5. The power unit 20 has at least the motive power source 45 (hereinafter referred to as an "engine 45"), the clutch 44, and the shift mechanism 43. The engine 45, the clutch 44, and the shift mechanism 43 are integrally incorporated in a crank case 26.

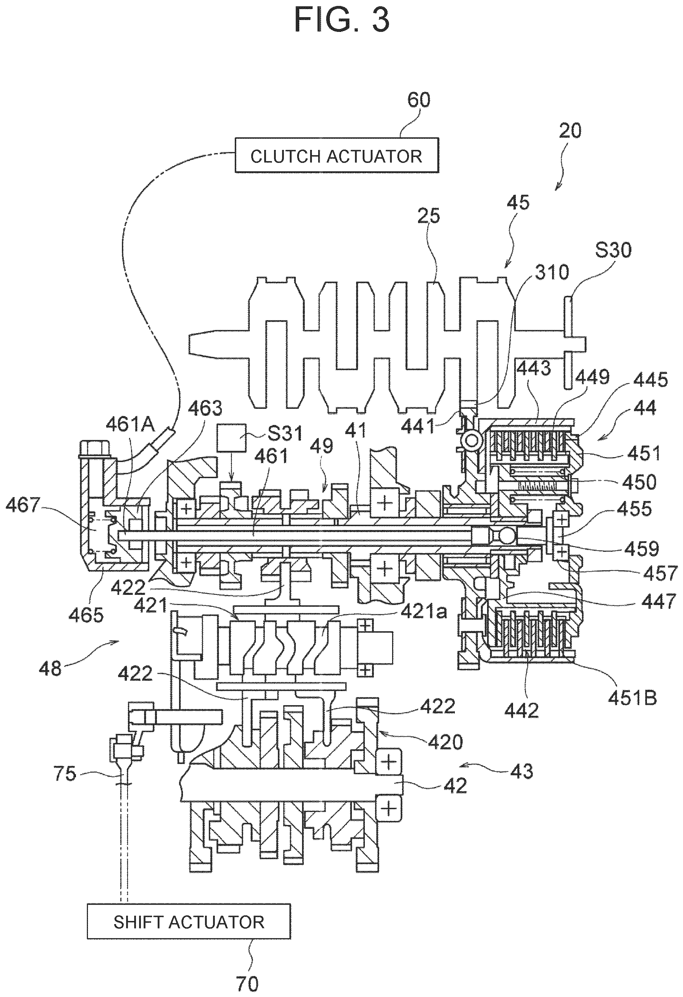

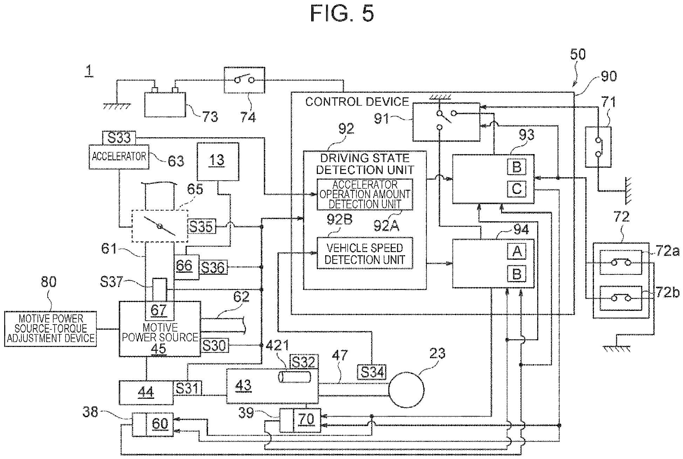

Next, the internal configuration of the power unit 20 will be described. FIG. 3 is a sectional view showing the internal configuration of the power unit 20. As shown in FIG. 3, the power unit 20 has the engine 45, the clutch 44, and the shift mechanism 43. The main shaft 41 is arranged parallel to the crankshaft 25. The drive shaft 42 is arranged parallel to the main shaft 41. The speed change control device 50 according to this embodiment includes the clutch 44, the shift mechanism 43, the clutch actuator 60, and a shift actuator 70 (see FIG. 5). As the clutch actuator 60 drives, the clutch 44 can be connected and disconnected. As the shift actuator 70 drives, switching of speed change gears of the shift mechanism 43 can be performed. That is, change of a gear position of the shift mechanism 43 can be performed. The speed change control device 50 according to this embodiment includes the motive power source-torque adjustment device 80 (see FIG. 5). The motive power source-torque adjustment device 80 adjusts the torque of the engine 45 when a speed change is performed. Further, the speed change control device 50 includes the control device 90. The control device 90 executes control of the driving of the clutch actuator 60 and the shift actuator 70 as well as control of the motive power source-torque adjustment device 80.

The speed change control device 50 need not include separate actuators as the clutch actuator 60 and the shift actuator 70. That is, the speed change control device 50 may include an actuator that performs connection and disconnection of the clutch 44 as well as switching of the speed change gears of the shift mechanism 43. In this case, this actuator has the function of connecting and disconnecting the clutch 44 and the function of switching the speed change gears of the shift mechanism 43.

In the fully connected state, the clutch 44 according to this embodiment transmits the torque without slippage from the engine 45 to the main shaft 41 as the clutch friction members are pressed. In the partially connected state, the clutch 44 transmits the torque as the clutch friction members are pressed with a pressing force that is lower than the pressing force in the fully connected state. In the disconnected state, the clutch 44 interrupts the torque transmission from the engine 45 to the main shaft 41. The clutch friction members include at least one of a driving-side clutch friction member (e.g., a friction disc or the like) and a driven-side clutch friction member (e.g., a clutch disc) or the like. The driving-side clutch friction member rotates integrally with a primary gear on a driven side of the clutch 44. The driven-side clutch friction member rotates integrally with the main shaft 41. In the fully connected state of the clutch 44, the driving-side clutch friction member and the driven-side clutch friction member are pressed against each other by a clutch spring (not shown). The driving-side clutch friction member and the driven-side clutch friction member rotate integrally by a friction force occurring between the driving-side clutch friction member and the driven-side clutch friction member. The torque of the engine 45 is transmitted from the driving-side clutch friction member to the main shaft 41 through the driven-side clutch friction member. In the disconnected state of the clutch 44, the driving-side clutch friction member and the driven-side clutch friction member are separated from each other against an elastic force of the clutch spring. Therefore, pressing between the driving-side clutch friction member and the driven-side clutch friction member is eliminated. Then, the driven-side clutch friction member rotates idly relative to the driving-side clutch friction member, so that the torque transmission is interrupted. In the partially connected state of the clutch 44, the driving-side clutch friction member presses the driven-side clutch friction member with a pressing force lower than the pressing force in the fully connected state to transmit the torque. When shifting the clutch 44 toward the disconnection side, the clutch actuator 60 separates the driving-side friction member and the driven-side friction member from each other against the elastic force of the clutch spring. The clutch actuator 60 reduces the pressing force that has been acting between the driving-side friction member and the driven-side friction member. Generally, in a friction clutch, a driving-side friction member and a driven-side friction member are pressed with a pressing force according to a clutch position. Then, a torque according to this pressing force is transmitted through the friction clutch. Thus, the clutch position and the torque transmitted through the friction clutch are correlated with each other.

The clutch 44 is, for example, a multi-disc friction clutch. The clutch 44 includes a clutch housing 443 and a clutch boss 447. On an inner side of the clutch housing 443, a plurality of friction plates 445 each functioning as the driving-side clutch friction member is provided. On an outer side of the clutch boss 447, a plurality of clutch plates 449 each functioning as the driven-side clutch friction member is provided. Each friction plate 445 is fixed on the clutch housing 443 with respect to a rotation direction of the main shaft 41. Therefore, the plurality of friction plates 445 rotates along with the clutch housing 443. Each friction plate 445 can change its position with respect to an axial direction of the main shaft 41.

The plurality of friction plates 445 is arrayed in the axial direction of the main shaft 41. Each clutch plate 449 faces each of adjacent friction plates 445. Each clutch plate 449 is fixed on the clutch boss 447 with respect to the rotation direction of the main shaft 41. Thus, the plurality of clutch plates 449 rotates along with the clutch boss 447. Each clutch plate 449 can change its position with respect to the axial direction of the main shaft 41.

In this embodiment, the plurality of friction plates 445 and the plurality of clutch plates 449 constitute a plate group 442.

As shown in FIG. 3, a pressure plate 451 is disposed outward of the main shaft 41 (on the right side in FIG. 3). The pressure plate 451 is formed in a substantially disc-like shape. At a radially outer-side part of the pressure plate 451, a pressing part 451B protruding toward the plate group 422 is formed. The pressing part 451B faces the friction plate 445 that is located farthest on the right side in the plate group 442.

The clutch 44 is provided with a spring 450. The spring 450 urges the pressure plate 451 inward (toward the left side in FIG. 3). That is, the spring 450 urges the pressure plate 451 in the direction in which the pressing part 451B presses the plate group 442.

A center part of the pressure plate 451 is engaged with one end portion of a push rod 455 (on the right side in FIG. 3) through a bearing 457. Thus, the pressure plate 451 is rotatable relative to the push rod 455. The main shaft 41 has a cylindrical shape. The other end portion (left end portion) of the push rod 455 is housed inside the main shaft 41. Inside the main shaft 41, a spherical ball 459 is provided. The ball 459 is adjacent to the other end portion (left end portion) of the push rod 455. Further, inside the main shaft 41, a push rod 461 adjacent to the ball 459 is provided.

One end portion (left end portion) 461A of the push rod 461 protrudes from the main shaft 41. At the one end portion 461A of the push rod 461, a piston 463 is integrally provided. The piston 463 is guided by a cylinder main body 465. The piston 463 is slidable in the axial direction of the main shaft 41.

When the clutch actuator 60 drives, a hydraulic fluid as a compressed fluid is supplied to a space 467 surrounded by the piston 463 and the cylinder main body 465. When the hydraulic fluid is supplied to the space 467, the piston 463 is pushed and moves in the rightward direction in FIG. 3. Thus, the piston 463 pushes the pressure plate 451 in the rightward direction in FIG. 3 through the push rod 461, the ball 459, the push rod 455, and the bearing 457. When the pressure plate 451 is pushed in the rightward direction in FIG. 3, the pressing part 451B of the pressure plate 451 separates from the friction plate 445. As a result, the clutch 44 assumes the disconnected state.

When connecting the clutch 44, the pressure plate 451 moves toward the left side in FIG. 3 by the spring 450. When the pressure plate 451 moves toward the left side in FIG. 2, the pressing part 451B presses the plate group 442 in the leftward direction. As a result, the friction plates 445 and the clutch plates 449 of the plate group 442 are brought into pressure-contact with each other. Thus, the clutch 44 assumes the fully connected state.

On the other hand, in the disconnected state of the clutch 44, the pressure plate 451 moves toward the right side in FIG. 3 by the push rod 455. Then, the pressing part 451B of the pressure plate 451 separates from the plate group 442. In the state where the pressing part 451B is separated from the plate group 442, each friction plate 445 and each clutch plate 449 are not in pressure-contact with each other. There is a small gap formed between each friction plate 445 and each clutch plate 449. Therefore, a friction force that can transmit the driving force does not occur between each friction plate 445 and each clutch plate 449.

In this way, the pressure plate 451 moves in one direction or the other direction along the axial direction of the main shaft 41 according to which of the driving force of the clutch actuator 60 and the urging force of the spring 450 is larger. In accordance with this movement, the state of the clutch 44 transitions between the fully connected state and the disconnected state. Hereinafter, unless otherwise defined, the fully connected state is that the clutch friction members are pressed and represents a state where the torque is transmitted without slippage from the engine 45 to the main shaft 41. The partially connected state represents a state where the torque is transmitted as the clutch friction members are pressed with a pressing force lower than the pressing force in the fully connected state. The disconnected state represents a state where the torque transmission from the engine 45 to the main shaft 41 is interrupted.

A gear 310 is integrally supported on the crankshaft 25 of the engine 45. The gear 441 is rotatable relative to the main shaft 41. The gear 441 is integrally provided on, for example, the clutch housing 443. Thus, the torque of the engine 45 is transmitted from the crankshaft 25 to the clutch housing 443 through the gear 441. Further, the torque of the engine 45 is transmitted from the clutch housing 443 to the clutch boss 447 by the friction force occurring between the plurality of friction plates 445 and the plurality of clutch plates 449. The clutch boss 447 and the main shaft 41 rotate integrally. That is, there is no relative rotation between the clutch boss 447 and the main shaft 41. Therefore, when the clutch 44 is connected, the torque of the engine 45 is transmitted to the main shaft 41.

The push rod 455 is not limited to the one that pushes the pressure plate 451 toward the right side in FIG. 3 by a mechanism inserted inside the main shaft 41. The push rod 455 may be one that pulls the pressure plate 451 toward the right side in FIG. 3 by a mechanism provided outside the pressure plate 451 (on the right side in FIG. 3).

The clutch 44 may be a single-disc clutch instead of a multi-disc clutch. The clutch 44 may include a centrifugal weight. In this case, the clutch 44 is connected and disconnected based on the driving of the clutch actuator 60 and a centrifugal force of the centrifugal weight.

Subsequently, the detailed configuration of the shift mechanism 43 will be described. The shift mechanism 43 according to this embodiment is a so-called dog-type shift mechanism.

In the power unit 20, an engine speed sensor S30 is provided on the crankshaft 25. The engine speed sensor S30 detects a rotation speed of the crankshaft 25. The crankshaft 25 is coupled to the main shaft 41 through the clutch 44. A main shaft rotation speed sensor S31 is provided on the main shaft 41. The main shaft rotation speed sensor S31 detects a rotation speed of the main shaft 41.

On the main shaft 41, multi-stage speed change gears 49 are mounted. On the other hand, on the drive shaft 42, a plurality of speed change gears 420 corresponding to the multi-stage speed change gears 49 is mounted. Of the multi-stage speed change gears 49 and the plurality of speed change gears 420, only one selected pair of gears mesh with each other. At least either the speed change gears 49 other than the selected speed change gear 49 among the multi-stage speed change gears 49 or the speed change gears 420 other than the selected speed change gear 420 among the plurality of speed change gears 420 are rotatable relative to the main shaft 41 or the drive shaft 42. That is, at least either the speed change gears 49 that are not selected or the speed change gears 420 that are not selected rotate idly relative to the main shaft 41 or the drive shaft 42. Thus, transmission of rotation between the main shaft 41 and the drive shaft 42 is performed through only the selected speed change gear 49 and the selected speed change gear 420 that mesh with each other.

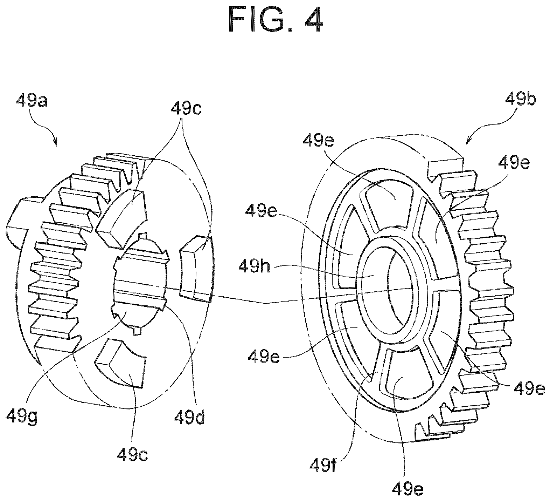

The specific configuration of the speed change gears 49 will be described using FIG. 4. FIG. 4 shows the configuration of the speed change gears 49. The configuration of the speed change gears 420 is similar and therefore description thereof will be omitted.

As the speed change gears 49, a first gear 49a and a second gear 49b are included. In the first gear 49a, engaging protrusions 49c are formed as a driving dog on an axial end surface. In the second gear 49b, engaging recesses 49e are formed as a driven dog in an axial end surface facing the engaging protrusions 49c. The shift mechanism 43 includes pluralities of first gears 49a and second gears 49b. The first gear 49a is disposed between one pair of second gears 49b. In the first gear 49a, three engaging protrusions 49c are formed. These engaging protrusions 49c are disposed evenly in a circumferential direction at an outer edge portion of the axial end surface of the first gear 49a. In the second gear 49b, six engaging recesses 49e are formed. These engaging recesses 49e are also evenly disposed in a circumferential direction.

At an axial center part of the first gear 49a, an insertion hole 49g through which the main shaft 41 and the drive shaft 42 are inserted is formed. A plurality of grooves 49d is formed in a circumferential surface of the insertion hole 49g. The first gear 49a is spline-fitted on the main shaft 41 and the drive shaft 42. An insertion hole 49h through which the main shaft 41 and the drive shaft 42 are inserted is formed in the second gear 49b. However, no groove is formed in this insertion hole 49h. Thus, the second gear 49b is mounted on the main shaft 41 and the drive shaft 42 in an idly rotatable state.

As a shift cam 421 (see FIG. 3) rotates, a shift fork 422 moves along a cam groove 421a. In conjunction with the movement of the shift fork 422 along the cam groove 421a, the first gear 49a moves in the axial direction along splines of the main shaft 41 and the drive shaft 42. Then, the engaging protrusions 49c of the first gear 49a engage in the engaging recesses 49e of the second gear 49b. Thereby the combination of the speed change gears 49, 420 that transmit the driving force from the main shaft 41 to the drive shaft 42 is switched, and thus a gear change is performed. The transmission 48 is formed by these speed change gears 49, 420 and the shift cam 421.

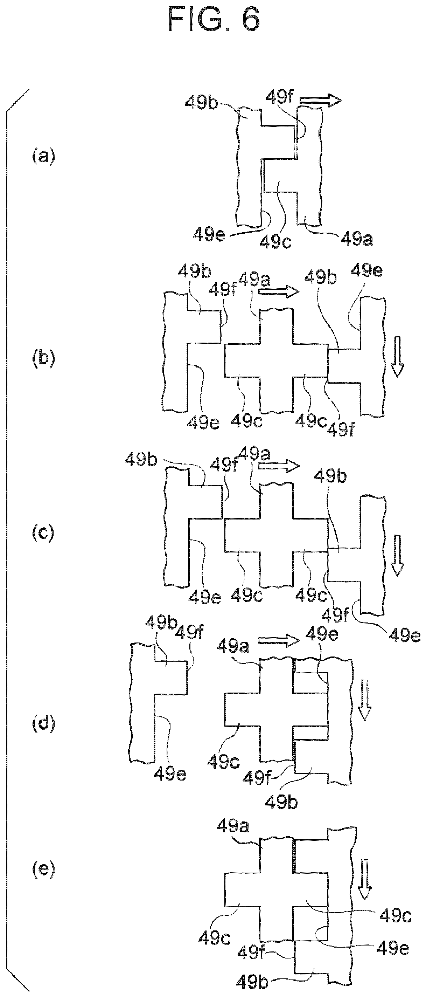

Next, states of the driving dog and the driven dog during switching of the gears in the speed change gears 49 will be described. FIG. 6 is an explanatory view illustrating actions of disengaging the driving dog and the driven dog from each other and engaging the driving dog and the driven dog with each other.

FIG. 6 (a) is a view showing a state when the first gear 49a is engaged with one second gear 49b. When the first gear 49a and the second gear 49b are engaged, the engaging protrusions 49c of the first gear 49a are in contact with inner surfaces of the engaging recesses 49e of the second gear 49b. Here, the engaging protrusions 49c of the first gear 49a are in a state of having entered deep inside the engaging recesses 49e of the second gear 49b. In this case, the driving force is transmitted from the main shaft 41 to the drive shaft 42. When performing a gear change from this state, the shift cam 421 (see FIG. 3) rotates and causes the first gear 49a to move in the rightward direction in FIG. 6 (a). As a result, the engaging protrusions 49c of the first gear 49a come out of the engaging recesses 49e of the second gear 49b as shown in FIG. 6 (b). This is called disengagement. When the first gear 49a moves further in the rightward direction in FIG. 6 (a), the engaging protrusions 49c of the first gear 49a come into contact with an axial end surface 49f of another second gear 49b disposed adjacently. This is called dog contact.

As shown in FIG. 6 (b), the second gear 49b is rotating relative to the first gear 49a. Therefore, when the engaging protrusions 49c of the first gear 49a are no longer in contact with the axial end surface 49f of the second gear 49b as shown in FIG. 6 (c), the engaging protrusions 49c of the first gear 49a enter the engaging recesses 49e of the second gear 49b as shown in FIG. 6 (d). This is called engagement. When the second gear 49b rotates further relative to the first gear 49a, the engaging protrusions 49c of the first gear 49a come into contact with the inner surfaces of the engaging recesses 49e of the second gear 49b as shown in FIG. 6 (e). Thus, the first gear 49a engages with another second gear 49b, so that the driving force is transmitted from the main shaft 41 to the drive shaft 42.

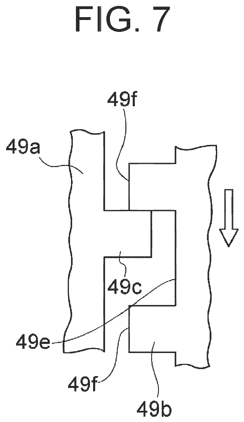

When the first gear 49a moves in the axial direction as the shift cam 421 (see FIG. 3) rotates, a state as shown in FIG. 7 may arise. That is, the engaging protrusions 49c of the first gear 49a may come into contact with the inner surfaces of the engaging recesses 49e of the second gear 49b in a state where the engaging protrusions 49c of the first gear 49a have not completely entered the engaging recesses 49e of the second gear 49b. This state is called partial engagement of dogs. In this case, the torque of the engine 45 is reduced and an adhesive force (load) between the engaging protrusions 49c of the first gear 49a and the engaging recesses 49e of the second gear 49b is removed. Thus, the engaging protrusions 49c of the first gear 49a can be made to enter deep inside the engaging recesses 49e of the second gear 49b.

Selection of the speed change gear 49 or the speed change gear 420 is performed by the shift cam 421. A plurality of cam grooves 421a is formed in an outer circumferential surface of the shift cam 421. One shift fork 422 is mounted in each cam groove 421a. Each shift fork 422 is engaged with predetermined speed change gear 49 and speed change gear 420 of the main shaft 41 and the drive shaft 42, respectively. As the shift cam 421 rotates, each of the plurality of shift forks 422 is guided by the cam groove 421a so as to move in the axial direction of the main shaft 41. Thus, gears that mesh with each other among the speed change gears 49 and the speed change gears 420 are selected. Specifically, among the pluralities of speed change gears 49 and speed change gears 420, only one pair of gears at a position corresponding to a rotation angle of the shift cam 421 enters a state of being fixed on the main shaft 41 and the drive shaft 42, respectively, by the splines. Thus, the gear position in the shift mechanism 43 is determined. As a result, transmission of rotation is performed at a predetermined gear ratio between the main shaft 41 and the drive shaft 42 through the speed change gear 49 and the speed change gear 420.

As a shift rod 75 moves reciprocatingly, the shift cam 421 rotates by a predetermined angle. As the shift actuator 70 drives, the shift rod 75 moves reciprocatingly.

By the configuration as has been described above, the predetermined pair of speed change gear 49 and speed change gear 420 are fixed on the main shaft 41 and the drive shaft 42, respectively. When the engine 45 is driven with the clutch 44 put in the fully connected state, the torque of the engine 45 is transmitted to the main shaft 41 through the clutch 44. Transmission of rotation is performed at a predetermined gear ratio between the main shaft 41 and the drive shaft 42 through the predetermined pair of speed change gear 49 and speed change gear 420, and the drive shaft 42 rotates. When the drive shaft 42 rotates, the torque is transmitted by a power transmission mechanism 47 (see FIG. 2) that connects the drive shaft 42 and the rear wheel 23 (see FIG. 2) to each other. Then, the rear wheel 23 rotates.

Next, the speed change control device 50 according to this embodiment will be described. FIG. 5 is a control block diagram of the speed change control device 50. As shown in FIG. 5, the speed change control device 50 includes the shift mechanism 43, the clutch 44, the clutch actuator 60, the shift actuator 70, and the control device (electric control unit) 90. The control device 90 has a switching determination unit 91, a driving state detection unit 92, a semi-automatic control unit 93, and a fully automatic control unit 94. In this embodiment, the case where the control device 90 is one unit has been described. However, the control device 90 may be one unit. Or the control device 90 may be composed of a plurality of units.

The motorcycle 2 includes a power source device 73 and a main switch 74. When the main switch 74 is operated by an occupant of the motorcycle 2, the power source device 73 and the control device 90 become electrically continuous with each other. Then, the control device 90 becomes operable. In this regard, the motorcycle 2 may include a relay switch or the like (not shown). In this case, part of the control device 90 can operate also when the main switch 74 is not operated.

As described above, in the power unit 20 (see FIG. 2), the engine speed sensor S30 is provided on the crankshaft 25 (see FIG. 3). In FIG. 5, the engine speed sensor S30 is adjacent to the engine 45. On the main shaft 41 (see FIG. 3), the main shaft rotation speed sensor S31 is provided. In FIG. 5, the main shaft rotation speed sensor S31 is adjacent to the clutch 44.

The motorcycle 2 includes an intake pipe 61, an exhaust pipe 62, an accelerator 63, a throttle valve 65, a fuel supply device 66, and an ignition device 67. The intake pipe 61 connects to the engine 45. The exhaust pipe 62 connects to the engine 45 at a position different from a position at which the intake pipe 61 connects thereto. The throttle valve 65 is provided inside the intake pipe 61. The throttle valve 65 adjusts an amount and a speed of air flowing through the intake pipe 61. The fuel supply device 66 is provided at an intermediate point in the intake pipe 61. The fuel supply device 66 may be a so-called carburetor. The fuel supply device 66 may be a fuel injection device. The fuel supply device 66 supplies fuel stored in the fuel tank 13 to the inside of the intake pipe 61. Further, the ignition device 67 is provided inside the engine 45. In this embodiment, an ignition timing of the ignition device 67 is electronically controlled. However, the ignition timing of the ignition device 67 may be mechanically controlled.

An opening degree of the throttle valve 65 changes based on an amount of pressing on the accelerator 63. As the opening degree of the throttle valve 65 changes, the amount of air passing through the intake pipe 61 changes. However, the opening degree of the throttle valve 65 may be electronically controlled.

The motorcycle 2 includes an accelerator operation amount sensor S33, a throttle position sensor S35, a fuel supply amount sensor S36, an ignition timing sensor S37, a shift position sensor S32, and a vehicle speed sensor S34. The accelerator operation amount sensor S33 detects the amount of pressing on the accelerator 63 as an operation amount. The throttle position sensor S35 detects the opening degree of the throttle valve 65. The fuel supply amount sensor S36 detects a fuel supply amount in the fuel supply device 66. The ignition timing sensor S37 detects a timing of igniting an air-fuel mixture in the ignition device 67. The shift position sensor S32 detects the gear position of the shift mechanism 43 by detecting the rotation angle of the shift cam 421 (see FIG. 3). The vehicle speed sensor S34 detects a vehicle speed of the motorcycle 2. These sensors may detect the respective amounts of shift directly or indirectly. These sensors may have an arithmetic operation function and calculate required physical amounts from predetermined physical amounts.

Further, the speed change control device 50 includes a potentiometer 38 and a potentiometer 39. The potentiometer 38 detects a driving amount of the clutch actuator 60. The potentiometer 39 detects a driving amount of the shift actuator 70. Particularly, the potentiometer 38 detects a rotation angle of the clutch actuator 60. The potentiometer 39 detects a rotation angle of the shift actuator 70. However, in the case where the speed change control device 50 includes an actuator that has both the function as the clutch actuator 60 and the function as the shift actuator 70 as described above, the speed change control device 50 need not include the two potentiometers (the potentiometer 38 and the potentiometer 39).

The driving state detection unit 92 of the control device 90 detects a driving state of the motorcycle 2 by detection values of the above-described sensors. That is, the driving state detection unit 92 receives an input of a signal based on the operation amount of the accelerator 63 from the accelerator operation amount sensor S33. The driving state detection unit 92 thereby detects the operation amount of the accelerator 63.

The driving state detection unit 92 acquires a signal based on the opening degree of the throttle valve 65 from the throttle position sensor S35. The driving state detection unit 92 thereby detects the opening degree of the throttle valve 65. The driving state detection unit 92 acquires a signal based on the fuel supply amount of the fuel supply device 66 from the fuel supply amount sensor S36. The driving state detection unit 92 thereby detects the fuel supply amount in the fuel supply device 66. The driving state detection unit 92 acquires a signal based on the ignition timing of the ignition device 67 from the ignition timing sensor S37. The driving state detection unit 92 thereby detects the ignition timing of the ignition device 67. The driving state detection unit 92 acquires a signal based on the rotation speed of the crankshaft 25 from the engine speed sensor S30. The driving state detection unit 92 thereby detects the rotation speed of the crankshaft 25. The driving state detection unit 92 acquires a signal based on the rotation speed of the main shaft 41 from the main shaft rotation speed sensor S31. The driving state detection unit 92 thereby detects the rotation speed of the main shaft 41. The driving state detection unit 92 acquires a signal based on the rotation angle of the shift cam 421 from the shift position sensor S32. The driving state detection unit 92 thereby detects the current gear position in the shift mechanism 43. The driving state detection unit 92 receives an input of a signal based on the vehicle speed of the motorcycle 2 from the vehicle speed sensor S34. The driving state detection unit 92 thereby detects the vehicle speed of the motorcycle 2.

The speed change control device 50 performs the speed change action as the clutch actuator 60 and the shift actuator 70, or only the shift actuator 70 drives. The speed change action of the speed change control device 50 is a series of actions consisting of disconnecting the clutch 44, changing the gear position of the shift mechanism 43, and connecting the clutch 44.

The speed change control device 50 can execute control in which a rider of the motorcycle 2 orders the above-described speed change action to start and the series of speed change actions is automatically performed. This control is control in which the driving of the clutch actuator 60 and the shift actuator 70 is started according to operation of a shift switch 72 (see FIG. 5 etc.) by the rider of the motorcycle 2. This control will be referred to as semi-automatic control Sc. The speed change control device 50 can execute control in which the series of speed change actions is automatically performed according to the driving state of the motorcycle 2, regardless of the intention of the rider of the motorcycle 2. This control is control in which the driving of the clutch actuator 60 and the shift actuator 70 is started according to detection of the driving state by the driving state detection device. This control will be referred to as fully automatic control Fc.

The speed change control device 50 according to this embodiment is configured to be able to switch between the semi-automatic control Sc and the fully automatic control Fc. Specifically, the control device 90 has the semi-automatic control unit 93 and the fully automatic control unit 94. The semi-automatic control unit 93 executes the semi-automatic control Sc. The fully automatic control unit 94 executes the fully automatic control Fc.

In the speed change control device 50 according to this embodiment, after the driving dog and the driven dog are engaged, the control device 90 controls the clutch actuator 60 so as to maintain partial connection of the clutch 44. Moreover, the control device 90 controls the motive power source-torque adjustment device 80 so as to retain the increased torque of the driving force. Thus, the front-rear acceleration of the vehicle 1, after the disengaged driving dog and driven dog are engaged, is maintained in a state of being higher than the front-rear acceleration at the point when a speed change command is generated. The control device 90 may control the clutch actuator 60 so as to put the clutch 44 in the partially connected state such that the aforementioned state is maintained while the driving dog and the driven dog are caused to be closer to each other from disengagement to engagement. Moreover, the control device 90 may control the motive power source-torque adjustment device 80 so as to increase the torque (engine torque) input into the transmission 48 to a first torque. Here, the front-rear acceleration refers to an acceleration in an advancing direction (front-rear direction) of the motorcycle 2. In the case where the speed change control device 50 according to this embodiment is applied to the vehicle 1 other than the motorcycle 2, the front-rear acceleration refers to an acceleration in an advancing direction of this vehicle 1. Maintaining the partially connected state of the clutch 44 represents a state where a state continues where the torque is transmitted as the clutch friction members are pressed with a pressing force lower than the pressing force in the fully connected state of the clutch 44. The partially connected state is regarded as continuing even when an absolute value of the pressing force increases or decreases to some extent.

In more detail, in this embodiment, driving states of the engine 45 when a speed change command is generated include a first driving state and a second driving state. The first driving state is specified from the state of the speed or the torque of the engine 45. The second driving state is specified as a state where the speed or the torque is higher than that in the first driving state. "When a speed change command is generated" refers to a time when the speed change command is generated, or to a predetermined period including a time around that and a point when the speed change command is generated. Specifically, the first driving state is a driving state where the engine 45 is driving at a low speed and a low torque. The second driving state is a driving state where the engine 45 is driving at a high speed and a high torque. In the case where the engine 45 is in the second driving state (high-speed, high-torque state) when a speed change command for an upshift is generated, the speed change control device 50 reduces the torque of the engine 45. In addition, the speed change control device 50 moves the clutch 44 from the fully connected state to the partially connected state. Then, the speed change control device 50 reduces the input torque to the transmission 48 and performs disengagement. Thereafter, the speed change control device 50 maintains the clutch 44 in the partially connected state such that a front-rear acceleration higher than the front-rear acceleration at the time of generation of the speed change command is generated immediately after engagement of the dogs. Further, the speed change control device 50 increases the torque of the engine 45 and increases the input torque to the transmission 48 to the first torque. Next, after the driving dog and the driven dog are engaged, the speed change control device 50 controls the clutch actuator 60 so as to maintain the partially connected state of the clutch 44, and moreover, controls the motive power source-torque adjustment device 80 so as to retain the increased torque (first torque) of the motive power source. The series of speed change control here will be referred to as first speed change control. In the case where the engine 45 is in the driving state (a state of generating a positive torque) when a speed change command for a downshift is generated, the speed change control device 50 puts the clutch 44 in the disconnected state, reduces the torque of the engine 45, and performs disengagement of the dogs. Thereafter, the speed change control device 50 maintains the clutch 44 in the partially connected state and increases the torque of the engine 45 such that a front-rear acceleration higher than the front-rear acceleration at the time of generation of the speed change command is generated immediately after engagement of the dogs. Then, the speed change control device 50 increases the input torque to the transmission 48 to the second torque. Next, after the driving dog and the driven dog are engaged, the speed change control device 50 controls the clutch actuator 60 so as to maintain the partially connected state of the clutch 44. Moreover, the speed change control device 50 controls the motive power source-torque adjustment device 80 so as to retain the increased torque (second torque) of the motive power source. The series of speed change control here will be referred to as second speed change control.

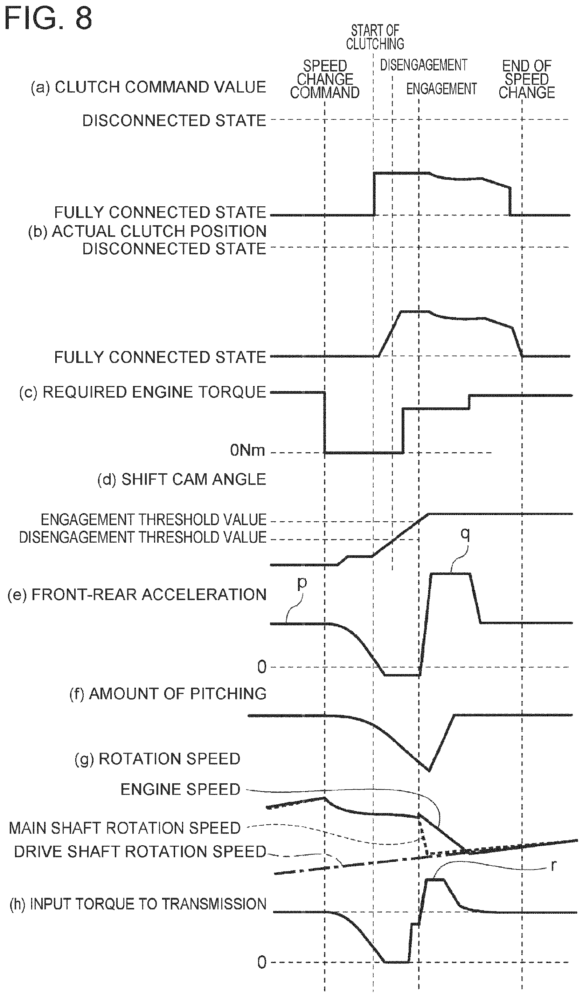

Control of the speed change control device 50 in the case where a speed change command for an upshift is generated while the engine 45 is in the second driving state will be described. FIG. 8 is a view showing a clutch command value, an actual clutch position, a required engine torque, a shift cam angle, the front-rear acceleration, an amount of pitching, the speed of the engine 45, the rotation speed of the main shaft 41, a rotation speed of the drive shaft 42, and the input torque to the transmission 48 in the case where a speed change command for an upshift is generated while the engine 45 is in the high-speed, high-torque state. The amount of pitching refers to an amount of shift in a motion of making a circle back and forth around a lateral rotational axis of the motorcycle 2. Specifically, when hard braking is applied to the front wheel 12 by operating a front brake lever 4c while the motorcycle 2 is traveling, the front fork 10 sinks and the vehicle 1 assumes a nose-down posture. When the throttle is turned sharply during acceleration, the front fork 10 extends and the vehicle 1 assumes a nose-up posture. Shifts like these are called pitching. An amount of shift of pitching is called an amount of pitching.

The input torque to the transmission 48 is determined by the torque of the engine 45 and the pressing force of the clutch 44. Here, when the clutch 44 is in the fully connected state, the torque is transmitted from the engine 45 to the main shaft 41 as the clutch friction members are pressed. When the clutch 44 is in the disconnected state, the torque transmission from the engine 45 to the main shaft 41 is interrupted. When the clutch 44 is in the partially connected state, the torque is transmitted as the clutch friction members are pressed with a pressing force lower than the pressing force when it is in the fully connected state.

As shown in FIG. 8, in the first speed change control, the speed change control device 50 maintains the clutch 44 in the fully connected state when a speed change is performed. In addition, the speed change control device 50 changes to control that starts reducing the torque of the engine 45 at the time of generation of a speed change command. Specifically, even when a speed change command is generated as an upshift switch 72a is pressed, if the engine 45 is in the first driving state, the command value for the clutch does not immediately switch from the fully connected state to the partially connected state. When a speed change command is generated, the control device 90 changes to control that starts reducing the required engine torque (the torque of the engine 45). Thus, the front-rear acceleration of the motorcycle 2 decreases gradually.

Thereafter, when a predetermined time elapses, the command value for the clutch switches from the fully connected state to the partially connected state (start of clutching). Thus, the pressure plate 451 is pushed in the rightward direction in FIG. 3 with respect to the axial direction of the main shaft 41, and the actual clutch position moves from the fully connected state to the partially connected state. In the shift mechanism 43, switching of the speed change gears is performed. Specifically, disengagement of the first gear 49a from the second gear 49b and engagement thereof with another second gear 49b are performed. Here, to reliably perform the disengagement, the speed change control device 50 performs control that reduces the pressing force of the clutch 44 and the torque of the engine 45, and the speed change control device 50 thereby reduces the input torque to the transmission 48. When the input torque to the transmission 48 decreases, the front-rear acceleration of the motorcycle 2 becomes lower. Accordingly, an amount of amplitude of pitching becomes gradually larger and reaches a maximum immediately after the engagement. Thereafter, when the command value for the clutch switches from the partially connected state to the fully connected state, the pressure plate 451 is pushed in the leftward direction in FIG. 3 with respect to the axial direction of the main shaft 41, and the actual clutch position moves from the partially connected state to the fully connected state. Finally, the clutch 44 assumes the fully connected state. When the engagement is performed, the amount of amplitude of pitching becomes gradually smaller and reaches zero. The amount of amplitude of pitching is not limited to zero as long as it becomes small.

In this embodiment, the first speed change control that increases the input torque to the transmission 48 to the first torque (indicated by reference sign r in FIG. 8) is performed. The speed change control device 50 executes the first speed change control such that a front-rear acceleration (indicated by reference sign q in FIG. 8) higher than the front-rear acceleration (indicated by reference sign p in FIG. 8) at the time of generation of the speed change command is generated immediately after the engagement. Specifically, the speed change control device 50 increases the input torque to the transmission 48 to the first torque before the dog engagement. To do so, the speed change control device 50 receives a clutch command value, and the clutch actuator 60 controls the pressing force of the clutch 44 so as to maintain the partially connected state of the clutch 44. Further, while the driving dog is moving toward the driven dog, the motive power source-torque adjustment device 80 increases the required engine torque and controls the torque of the engine 45. The control device 90 performs control so as to maintain, for a predetermined time, the required engine torque that has been raised while the driving dog was moving toward the driven dog. Before the engagement of the dogs, with the clutch in the partially connected state and the friction plates 445 and the clutch plates 449 in a state of pressure-contact in a static friction state, the torque of the engine 45 becomes the input torque to the transmission through the clutch. That is, before the dog engagement, the input torque to the transmission increases as the engine torque increases. When the dogs are engaged next, slippage occurs between the friction plates 445 and the clutch plates 449, and a kinetic friction state arises. Therefore, after the dogs are engaged, the torque increased by the pressing force of the clutch 44 and the torque of the engine 45 that have been set in advance of the engagement of the dogs is transmitted to the main shaft and output through the dogs, so that the input torque to the transmission increases further. The control device 90 may control the clutch actuator 60 such that the clutch 44 assumes the fully connected state after the driving dog and the driven dog are engaged and the partially connected state of the clutch 44 is maintained. Moreover, after the increased torque of the driving force is maintained, the control device 90 may control the motive power source-torque adjustment device 80 so as to further increase the torque of the engine 45. In this case, the speed of the vehicle 1 that has decreased after generation of the speed change command can be increased by the increased front-rear acceleration of the vehicle 1 after the disengaged driving dog and driven dog are engaged.

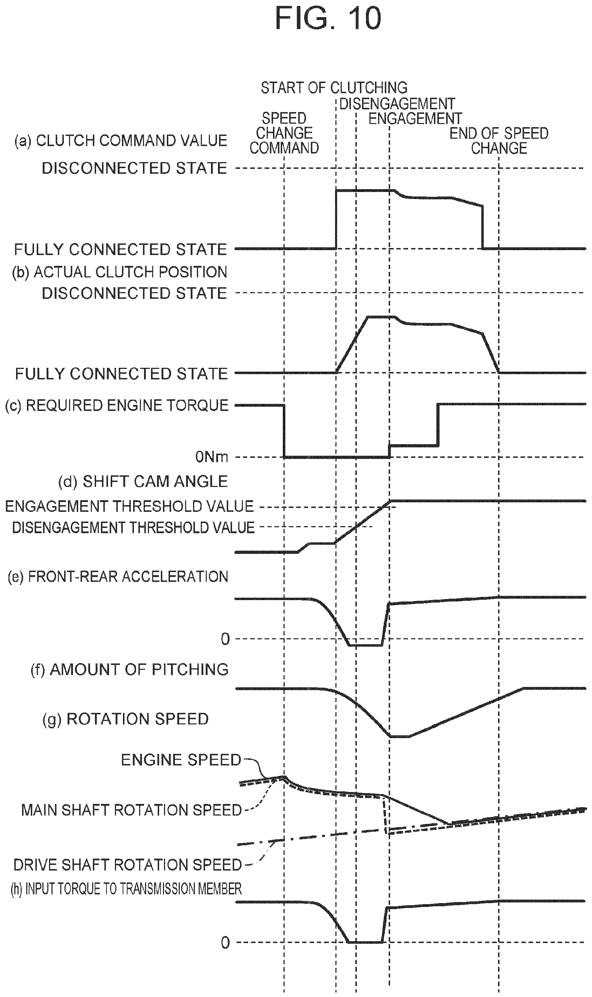

On the other hand, a conventional speed change action changes to control that starts reducing the torque of the engine 45 at the time of generation of a speed change command. Thereafter, when a predetermined time elapses, the command value for the clutch switches from the fully connected state to the partially connected state (start of clutching), and switching of the speed change gears is performed in the shift mechanism 43. Specifically, disengagement is performed and engagement with another gear is performed. In the conventional speed change action, after the driving dog and the driven dog are engaged, a pressing force is applied to the clutch only to such an extent that a torque almost equal to that before the speed change is transmitted (see FIG. 10). Thus, a high front-rear acceleration cannot be obtained immediately after the dog engagement.

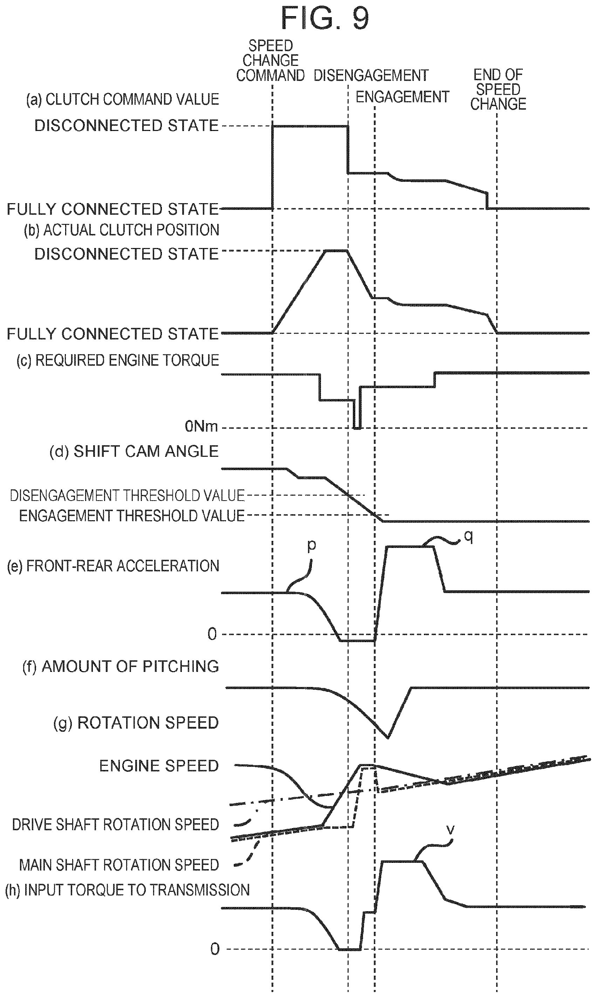

Next, contents of control (second speed change control) by the speed change control device 50 in the case where the engine 45 is in the driving state (the state of outputting a positive torque) when a speed change command for a downshift is generated will be described. FIG. 9 is a view showing the clutch command value, the actual clutch position, the required engine torque, the shift cam angle, the front-rear acceleration, the amount of pitching, the engine speed, the main shaft rotation speed, the drive shaft rotation speed, and the input torque to the transmission 48 in the case where the engine 45 is in the state of outputting a positive torque when a speed change command for a downshift is generated. As shown in FIG. 9, in the second speed change control, the speed change control device 50 starts the disconnection control of the clutch 44 at the time of generation of the speed change command. The speed change control device 50 starts reducing the torque of the engine 45 based on a timing before the clutch 44 assumes the disconnected state as the disconnection control of the clutch 44 is started. The speed change control device 50 puts the clutch 44 in the disconnected state at the time of dog disengagement, and puts it in the partially connected state after the dog disengagement and before dog engagement.

When a speed change command is generated as a downshift switch 72b is pressed, the speed change control device 50 switches the command value for the clutch from the fully connected state to the disconnected state. Thus, the pressure plate 451 is pushed in the rightward direction in FIG. 3 with respect to the axial direction of the main shaft 41, so that the actual clutch position moves gradually from the fully connected state to the disconnected state. Then, the disconnected state is reached before the first gear 49a is disengaged from the second gear 49b. When a predetermined time has elapsed since the speed change command has been generated, the control device 90 changes to control that starts reducing the required engine torque (the torque of the engine 45). Thus, the front-rear acceleration of the motorcycle 2 becomes gradually lower.

Then, when disengagement of the first gear 49a from the second gear 49b is performed, the command value for the clutch switches to the partially connected state. Thus, the pressure plate 451 is pushed in the leftward direction in FIG. 3 with respect to the axial direction of the main shaft 41. The actual clutch position moves gradually from the disconnected state to the partially connected state. Thus, the partially connected state is reached after the disengagement of the dogs and before the engagement of the dogs. Thereafter, when the command value for the clutch switches from the partially connected state to the fully connected state, the pressure plate 451 is further pushed in the leftward direction in FIG. 3 with respect to the axial direction of the main shaft 41, so that the actual clutch position moves gradually from the partially connected state to the fully connected state, and finally the clutch 44 assumes the fully connected state. In the shift mechanism 43, switching of the speed change gears is performed. Specifically, disengagement of the first gear 49a from the second gear 49b and engagement thereof with another second gear 49b are performed. Here, the disengagement of the dogs is performed by the speed change control device 50 controlling the pressing force of the clutch 44 and the torque of the engine 45 so as to reduce the input torque to the transmission 48. After the engagement of the dogs is performed, the speed change control device 50 performs an action of increasing the input torque to the transmission 48 by controlling the pressing force of the clutch 44 and the torque of the engine 45. As shown in FIG. 9, when the engagement of the dogs is performed, the front-rear acceleration of the motorcycle 2 returns to zero. When the front-rear acceleration becomes lower, the amount of amplitude of pitching becomes gradually larger and reaches a maximum immediately after the engagement. Thereafter, when the command value for the clutch switches from the partially connected state to the fully connected state, the pressure plate 451 is pushed in the leftward direction in FIG. 3 with respect to the axial direction of the main shaft 41. The actual clutch position moves gradually from the partially connected state to the fully connected state, and finally the clutch 44 assumes the fully connected state. When the engagement of the dogs is performed, the amount of amplitude of pitching becomes gradually smaller and reaches zero. The amount of amplitude of pitching is not limited to zero as long as it becomes small.

In this embodiment, the speed change control device 50 performs the second speed change control that increases the input torque to the transmission 48 to the second torque (indicated by reference sign v in FIG. 9). The speed change control device 50 executes the second speed change control such that a front-rear acceleration (indicated by reference sign q in FIG. 9) higher than the front-rear acceleration (indicated by reference sign p in FIG. 9) at the time of generation of the speed change command is generated immediately after the engagement of the dogs. Specifically, the speed change control device 50 controls the input torque to the transmission 48 to the second torque before the engagement of the dogs. To do so, the speed change control device 50 receives a clutch command value, and the clutch actuator 60 controls the pressing force of the clutch 44 so as to maintain the partially connected state of the clutch 44. Further, while the driving dog is moving toward the driven dog, the motive power source-torque adjustment device 80 increases the required engine torque and controls the torque of the engine 45. The control device 90 performs control so as to maintain, for a predetermined time, the required engine torque that has been raised while the driving dog was moving toward the driven dog. Before the engagement of the dogs, with the clutch in the partially connected state and the friction plates 445 and the clutch plates 449 in a state of pressure-contact in a static friction state, the torque of the engine 45 becomes the input torque to the transmission through the clutch. That is, before the dog engagement, the input torque to the transmission increases as the engine torque increases. When the dogs are engaged next, slippage occurs between the friction plates 445 and the clutch plates 449, and a kinetic friction state arises. Therefore, after the dogs are engaged, the torque increased by the pressing force of the clutch 44 and the torque of the engine 45 that have been set in advance of the engagement of the dogs is transmitted to the main shaft and output through the dogs, so that the input torque to the transmission increases further. Therefore, immediately after the dog engagement, a front-rear acceleration higher than the front-rear acceleration at the time of generation of the speed change command can be obtained. The amount of amplitude of pitching can be reduced early.

In the vehicle 1 of this embodiment, after the driving dog and the driven dog are engaged, the control device 90 may control the clutch actuator 60 so as to maintain the partially connected state of the clutch 44. Moreover, the control device 90 may control the motive power source-torque adjustment device 80 so as to retain the increased torque of the driving force. In this case, the front-rear acceleration of the vehicle 1 after the disengaged driving dog and driven dog are engaged is retained in the state of being higher than the front-rear acceleration of the vehicle 1 at the point when the speed change command is generated.

In the vehicle 1 of this embodiment, after the driving dog and the driven dog are engaged, the control device 90 may control the clutch actuator 60 so as to maintain the partially connected state of the clutch 44 and then put the clutch 44 in the fully connected state. Further, the control device 90 may control the motive power source-torque adjustment device 80 so as to maintain the increased torque of the driving force and then further increase the torque of the engine 45. In this case, the speed of the vehicle 1 that has decreased after the speed change command is generated can be increased by the increased front-rear acceleration of the vehicle 1 after the disengaged driving dog and driven dog are engaged.

In the vehicle 1 of this embodiment, the control device 90 performs engagement control of the driving dog and the driven dog by controlling the shift actuator 70. The control device 90 controls the shift actuator 70 so as to cause the driving dog and the driven dog to be closer to each other from the disengaged state to the engaged state continuously without a temporary stop such that the torque is transmitted from the engine 45 to the drive shaft when the disengaged driving dog and driven dog are engaged later. While the driving dog and the driven dog are caused to be closer to each other, the control device 90 may control the clutch actuator 60 so as to put the clutch 44 in the partially connected state. Moreover, the control device 90 may control the motive power source-torque adjustment device 80 so as to increase the torque of the engine 45. By such control, the front-rear acceleration of the vehicle 1 after the disengaged driving dog and driven dog are engaged may be made higher than the front-rear acceleration of the vehicle 1 at the point when the speed change command is generated.

In the vehicle 1 of this embodiment, in the case where the driving state of the engine 45 when a shift command is generated is the state of outputting a positive torque, the control device 90 may control the clutch actuator 60 so as to put the clutch 44 in the partially connected state while the driving dog and the driven dog are caused to be closer to each other from the disengaged state to the engaged state, such that the torque is transmitted from the engine 45 to the drive shaft when the disengaged driving dog and driven dog are engaged later. Moreover, the control device 90 may control the motive power source-torque adjustment device 80 so as to increase the torque of the engine 45. By such control, the front-rear acceleration of the vehicle 1 after the disengaged driving dog and driven dog are engaged may be made higher than the front-rear acceleration of the vehicle 1 at the point when the speed change command is generated.

In the vehicle 1 of this embodiment, in the case where the driving state of the engine 45 when an upshift command is generated is the high-speed, high-torque state, or the case where the driving state of the engine 45 when a downshift command is generated is the state of outputting a positive torque, the control device 90 may control the clutch actuator 60 so as to put the clutch 44 in the partially connected state while the driving dog and the driven dog are caused to be closer to each other from the disengaged state to the engaged state such that the torque is transmitted from the engine 45 to the drive shaft when the disengaged driving dog and driven dog are engaged later. Moreover, the control device 90 may control the motive power source-torque adjustment device 80 so as to increase the torque of the engine 45. By such control, the front-rear acceleration of the vehicle 1 after the disengaged driving dog and driven dog are engaged may be made higher than the front-rear acceleration of the vehicle 1 at the point when the speed change command is generated.

In the vehicle 1 of this embodiment, when disengaging the driving dog and the driven dog according to generation of a speed change command, the motive power source-torque adjustment device 80 is controlled so as to reduce the torque of the engine 45, and the control device 90 controls the clutch actuator 60 so as to put the clutch 44 in the partially connected state while the driving dog and the driven dog are caused to be closer to each other from the disengaged state to the engaged state such that the torque is transmitted from the engine 45 to the drive shaft when the disengaged driving dog and driven dog are engaged later. Moreover, the control device 90 controls the motive power source-torque adjustment device 80 so as to increase the torque of the engine 45. By such control, the front-rear acceleration of the vehicle 1 after the disengaged driving dog and driven dog are engaged may be made higher than the front-rear acceleration of the vehicle 1 at the point when the speed change command is generated. In this case, since the torque of the engine 45 has been reduced during the period of the disengaging action, the disengagement can be reliably performed.

In the vehicle 1 of this embodiment, the control device 90 reduces the input torque to the transmission 48 and performs disengagement by controlling at least either the pressing force of the clutch 44 or the torque of the engine 45, and the control device 90 increases the input torque to the transmission 48 to the first torque by controlling at least either the pressing force of the clutch 44 or the torque of the engine 45 while the driving dog is moving toward the driven dog, such that a front-rear acceleration higher than the front-rear acceleration at the time of generation of the speed change command occurs immediately after the engagement of the dogs. In this case, as the control device 90 controls at least either the pressing force of the clutch 44 or the torque of the engine 45, a front-rear acceleration higher than the front-rear acceleration at the time of generation of the speed change command can be more reliably generated immediately after the engagement of the dogs.

The speed change control device 50 according to this embodiment is not limited to the above-described aspects and various changes can be made thereto.

For example, a speed change control device 50 according to a modified example reduces the input torque to the transmission 48 and performs disengagement by controlling both the pressing force of the clutch 44 and the torque of the engine 45 in the first speed change control and/or the second speed change control. However, the embodiment is not limited to such an aspect. A speed change control device 50 according to another modified example may reduce the input torque to the transmission 48 and perform disengagement by controlling only either the pressing force of the clutch 44 or the torque of the engine 45 in the first and/or second speed change control. Specifically, when reducing the input torque to the transmission 48 and performing disengagement by controlling only the pressing force of the clutch 44, the speed change control device 50 according to the modified example reduces the input torque by putting the clutch 44 in the disconnected state. When reducing the input torque to the transmission 48 and performing disengagement by controlling only the torque of the engine 45, the speed change control device 50 according to the modified example reduces the input torque to the transmission 48 by only reducing the torque of the engine 45 while putting the clutch 44 in the fully connected state.

In the above description, the input torque to the transmission 48 is increased by controlling both the pressing force of the clutch 44 and the torque of the engine 45 such that a front-rear acceleration higher than the front-rear acceleration at the time of generation of the speed change command occurs immediately after the engagement in the first speed change control and/or the second speed change control. However, the embodiment is not limited to such an aspect. A speed change control device 50 according to another modified example may increase the input torque to the transmission 48 by controlling only either the pressing force of the clutch 44 or the torque of the engine 45 in the first speed change control and/or the second speed change control. Specifically, when increasing the input torque to the transmission 48 by controlling only the pressing force of the clutch 44, the control device 90 controls the pressing force of the clutch 44 and thereby the control device 90 increases the input torque to the transmission 48, while the torque of the engine 45 is kept at a magnitude according to the amount of pressing on the accelerator. When increasing the input torque to the transmission 48 by controlling only the torque of the engine 45 in the first speed change control, the speed change control device 50 according to the modified example increases the input torque to the transmission 48 by only performing the control that increases the torque of the engine 45, while putting the clutch 44 in the fully connected state.

### Reference Signs List

- 1: Vehicle
- 2: Motorcycle
- 3: Head pipe
- 4: Steering handlebar
- 5: Rear arm bracket
- 6: Vehicle body frame
- 6a: Frame part
- 10: Front fork
- 12: Front wheel
- 13: Fuel tank
- 14: Seat
- 20: Power unit
- 21: Rear arm
- 22: Pivot shaft
- 23: Rear wheel
- 25: Crankshaft
- 26: Crank case
- 38: Potentiometer
- 39: Potentiometer
- 41: Main shaft
- 42: Drive shaft
- 43: Shift mechanism
- 44: Clutch
- 45: Motive power source, engine
- 47: Power transmission mechanism
- 48: Transmission
- 49: Speed change gear
- 49a: First gear
- 49b: Second gear
- 49c: Engaging protrusion
- 49d: Groove
- 49e: Engaging recess
- 49f: Axial end surface
- 49g: Insertion hole
- 49h: Insertion hole
- 50: Speed change control device
- 60: Clutch actuator
- 61: Intake pipe
- 62: Exhaust pipe
- 63: Accelerator
- 65: Throttle valve
- 66: Fuel supply device
- 67: Ignition device
- 70: Shift actuator
- 71: Control selection switch
- 72: Shift switch
- 72a: Upshift switch
- 72b: Downshift switch
- 73: Power source device
- 74: Main switch
- 75: Shift rod
- 80: Motive power source-torque adjustment device
- 90: Control device
- 91: Switching determination unit
- 92: Driving state detection unit
- 93: Semi-automatic control unit
- 94: Fully automatic control unit
- 310: Gear
- 420: Speed change gear
- 421: Shift cam
- 421a: Cam groove
- 422: Shift fork
- 441: Gear
- 442: Plate group
- 443: Clutch housing
- 445: Friction plate
- 447: Clutch boss
- 449: Clutch plate
- 450: Spring
- 451: Pressure plate
- 451B: Pressing part
- 455: Push rod
- 457: Bearing
- 459: Ball
- 461: Push rod
- 461A: One end portion
- 463: Piston
- 465: Cylinder main body
- 467: Space

## Claims

1. A vehicle (1) equipped with a dog clutch-type speed change device (50) including:
a clutch (44) that is configured to, in a fully connected state, transmit a torque from a motive power source (45) to a main shaft (41) as a clutch friction member is pressed, in a partially connected state, transmit the torque as the clutch friction member is pressed with a pressing force lower than a pressing force in the fully connected state, and in a disconnected state, interrupt the torque transmission from the motive power source (45) to the main shaft (41);
a clutch actuator (60) that is configured to control the clutch (44) and changes the state of the clutch (44);
a transmission (48) that is configured to engage a driving dog and a driven dog by causing the driving dog and the driven dog to be closer to each other and disengages the driving dog and the driven dog by causing the driving dog and the driven dog to be apart from each other, and thus switches gears that transmit the torque between the main shaft (41) and a drive shaft (42);
a motive power source-torque adjustment device (80) that is configured to adjust the torque of the motive power source (45); and
a control device (90) that is configured to control the clutch actuator (60) and the motive power source-torque adjustment device (80), **characterized in that**
the control device (90) is configured to, while causing the driving dog and the driven dog to be closer to each other from a disengaged state to an engaged state, control the clutch actuator (60) so as to put the clutch (44) in the partially connected state and control the motive power source-torque adjustment device (80) so as to increase the torque of the motive power source (45), such that the torque is transmitted from the motive power source (45) to the drive shaft (42) when the disengaged driving dog and driven dog are engaged later, whereby a front-rear acceleration of the vehicle (1) after the disengaged driving dog and driven dog are engaged becomes higher than a front-rear acceleration of the vehicle (1) at a point when a speed change command is generated.

2. The vehicle (1) according to claim 1, wherein the control device (90) is configured to, after the driving dog and the driven dog are engaged, control the clutch actuator (60) so as to maintain the partially connected state of the clutch (44) and control the motive power source-torque adjustment device (80) so as to retain the increased torque of the motive power source (45), whereby the front-rear acceleration of the vehicle (1) after the disengaged driving dog and driven dog are engaged is retained in a state of being higher than the front-rear acceleration of the vehicle at the point when the speed change command is generated.

3. The vehicle (1) according to claim 1 or 2, wherein the control device (90) is configured to, after the driving dog and the driven dog are engaged, control the clutch actuator (60) so as to maintain the partially connected state of the clutch (44) and then put the clutch (44) in the fully connected state and control the motive power source-torque adjustment device (80) so as to maintain the increased torque of the motive power source (45) and then further increase the torque of the motive power source (45), whereby a speed of the vehicle that has decreased after the speed change command is generated is increased by the increased front-rear acceleration of the vehicle (1) after the disengaged driving dog and driven dog are engaged.

4. The vehicle (1) according to any one of claims 1 to 3, wherein the dog clutch-type speed change device (50) includes a shift actuator (70) that is controlled by the control device (90) and is configured to perform a speed change of the transmission (48), wherein
the control device (90) is configured to, while controlling the shift actuator so as to cause the driving dog and the driven dog to be closer to each other from the disengaged state to the engaged state continuously without a temporary stop, control the clutch actuator (60) so as to put the clutch (44) in the partially connected state and control the motive power source-torque adjustment device (80) so as to increase the torque of the motive power source (45), such that the torque is transmitted from the motive power source (45) to the drive shaft (42) when the disengaged driving dog and driven dog are engaged later, whereby the front-rear acceleration of the vehicle (1) after the disengaged driving dog and driven dog are engaged becomes higher than the front-rear acceleration of the vehicle at the point when the speed change command is generated.

5. The vehicle (1) according to any one of claims 1 to 4, wherein, in a case where a driving state of the motive power source (45) when a shift command is generated is a state of outputting a positive torque, the control device (90) is configured to, while causing the driving dog and the driven dog to be closer to each other from the disengaged state to the engaged state, control the clutch actuator (60) so as to put the clutch (44) in the partially connected state and control the motive power source-torque adjustment device (80) so as to increase the torque of the motive power source (45), such that the torque is transmitted from the motive power source (45) to the drive shaft (42) when the disengaged driving dog and driven dog are engaged later, whereby the front-rear acceleration of the vehicle (1) after the disengaged driving dog and driven dog are engaged becomes higher than the front-rear acceleration of the vehicle (1) at the point when the speed change command is generated.

6. The vehicle (1) according to any one of claims 1 to 4, wherein
when driving states of the motive power source (45) are defined as a low-speed, low-torque state where a speed or an output torque of the motive power source (45) is low, and a high-speed, high-torque state where the speed or the torque is high relative to that in the low-speed, low-torque state,
in a case where the driving state of the motive power source (45) when an upshift command is generated is the high-speed, high-torque state or a case where the driving state of the motive power source (45) when a downshift command is generated is a state of outputting a positive torque, the control device (90) is configured to, while causing the driving dog and the driven dog to be closer each other from the disengaged state to the engaged state, control the clutch actuator (60) so as to put the clutch (44) in the partially connected state and control the motive power source-torque adjustment device (80) so as to increase the torque of the motive power source (45), such that the torque is transmitted from the motive power source (45) to the drive shaft (42) when the disengaged driving dog and driven dog are engaged later, whereby the front-rear acceleration of the vehicle (1) after the disengaged driving dog and driven dog are engaged becomes higher than the front-rear acceleration of the vehicle at the point when the speed change command is generated.

7. The vehicle (1) according to any one of claims 1 to 6, wherein the control device (90) is configured to, when disengaging the driving dog and the driven dog according to generation of the speed change command, control the motive power source-torque adjustment device (80) so as to reduce the torque of the motive power source (45), and to, while causing the driving dog and the driven dog to be closer to each other from the disengaged state to the engaged state, control the clutch actuator (60) so as to put the clutch (44) in the partially connected state and control the motive power source-torque adjustment device (80) so as to increase the torque of the motive power source (45), such that the torque is transmitted from the motive power source (45) to the drive shaft (42) when the disengaged driving dog and driven dog are engaged later, whereby the front-rear acceleration of the vehicle (1) after the disengaged driving dog and driven dog are engaged becomes higher than the front-rear acceleration of the vehicle (1) at the point when the speed change command is generated.

## Patentansprüche

1. Ein Fahrzeug (1), das mit einer Gangwechselvorrichtung vom Klauenkupplungstyp (50) versehen ist, die folgende Merkmale umfasst:
eine Kupplung (44), die dazu konfiguriert ist, in einem vollständig verbundenen Zustand ein Drehmoment von einer Bewegungsleistungsquelle (45) zu einer Hauptwelle (41) zu übertragen, während ein Kupplungsreibungsbauglied gedrückt wird, in einem teilweise verbundenen Zustand das Drehmoment zu übertragen, während das Kupplungsreibungsbauglied mit einer Druckkraft gedrückt wird, die niedriger ist als eine Druckkraft in dem vollständig verbundenen Zustand, und in einem getrennten Zustand die Drehmomentübertragung von der Bewegungsleistungsquelle (45) zu der Hauptwelle (41) zu unterbrechen;
einen Kupplungsaktor (60), der dazu konfiguriert ist, die Kupplung (44) zu steuern, und der den Zustand der Kupplung (44) ändert;
ein Getriebe (48), das dazu konfiguriert ist, eine Antriebsklaue und eine angetriebene Klaue in Eingriff zu bringen, indem es bewirkt, dass die Antriebsklaue und die angetriebene Klaue einander näher sind, und das die Antriebsklaue und die angetriebene Klaue voneinander löst, indem es bewirkt, dass die Antriebsklaue und die angetriebene Klaue voneinander entfernt sind, und somit Getrieberäder wechselt, die das Drehmoment zwischen der Hauptwelle (41) und einer Antriebswelle (42) übertragen;
eine Bewegungsleistungsquellen-Drehmomenteinstellvorrichtung (80), die dazu konfiguriert ist, das Drehmoment der Bewegungsleistungsquelle (45) einzustellen; und
eine Steuervorrichtung (90), die dazu konfiguriert ist, den Kupplungsaktor (60) und die Bewegungsleistungsquellen-Drehmomenteinstellvorrichtung (80) zu steuern, **dadurch gekennzeichnet, dass**:
die Steuervorrichtung (90) dazu konfiguriert wird, während bewirkt wird, dass die Antriebsklaue und die angetriebene Klaue einander näher sind, von einem gelösten Zustand zu einem eingreifenden Zustand, den Kupplungsaktor (60) dahingehend zu steuern, die Kupplung (44) in den teilweise verbundenen Zustand zu bringen, und die Bewegungsleistungsquellen-Drehmomenteinstellvorrichtung (80) dahingehend zu steuern, das Drehmoment der Bewegungsleistungsquelle (45) zu erhöhen, so dass das Drehmoment von der Bewegungsleistungsquelle (45) zu der Antriebswelle (42) übertragen wird, wenn die Antriebsklaue und die angetriebene Klaue, die voneinander gelöst sind, später in Eingriff gebracht werden, wobei eine Vorne-Hinten-Beschleunigung des Fahrzeugs (1), nachdem die Antriebsklaue und die angetriebene Klaue, die voneinander gelöst sind, in Eingriff gebracht sind, größer wird als eine Vorne-Hinten-Beschleunigung des Fahrzeugs (1) an einem Punkt, wenn ein Gangwechselbefehl erzeugt wird.

2. Das Fahrzeug (1) gemäß Anspruch 1, wobei die Steuervorrichtung (90) dazu konfiguriert ist, nachdem die Antriebsklaue und die angetriebene Klaue in Eingriff gebracht sind, den Kupplungsaktor (60) dahingehend zu steuern, den teilweise verbundenen Zustand der Kupplung (44) beizubehalten, und die Bewegungsleistungsquellen-Drehmomenteinstellvorrichtung (80) dahingehend zu steuern, das erhöhte Drehmoment der Bewegungsleistungsquelle (45) zu halten, wobei die Vorne-Hinten-Beschleunigung des Fahrzeugs (1), nachdem die Antriebsklaue und die angetriebene Klaue, die voneinander gelöst sind, in Eingriff gebracht sind, in einem Zustand gehalten wird, in dem dieselbe größer ist als die Vorne-Hinten-Beschleunigung des Fahrzeugs an dem Punkt, wenn der Gangwechselbefehl erzeugt wird.

3. Das Fahrzeug (1) gemäß Anspruch 1 oder 2, wobei die Steuervorrichtung (90) dazu konfiguriert ist, nachdem die Antriebsklaue und die angetriebene Klaue in Eingriff gebracht sind, den Kupplungsaktor (60) dahingehend zu steuern, den teilweise verbundenen Zustand der Kupplung (44) beizubehalten und dann die Kupplung (44) in den vollständig verbundenen Zustand zu bringen, und die Bewegungsleistungsquellen-Drehmomenteinstellvorrichtung (80) dahingehend zu steuern, das erhöhte Drehmoment der Bewegungsleistungsquelle (45) beizubehalten und dann das Drehmoment der Bewegungsleistungsquelle (45) weiter zu erhöhen, wobei ein Gang des Fahrzeugs, der nach dem Erzeugen des Gangwechselbefehls verringert wurde, durch die erhöhte Vorne-Hinten-Beschleunigung des Fahrzeugs (1) erhöht wird, nachdem die Antriebsklaue und die angetriebene Klaue, die voneinander gelöst sind, in Eingriff gebracht sind.

4. Das Fahrzeug (1) gemäß einem der Ansprüche 1 bis 3, wobei die Gangwechselvorrichtung vom Klauenkupplungstyp (50) einen Schaltaktor (70) umfasst, der durch die Steuervorrichtung (90) gesteuert wird und dazu konfiguriert ist, einen Gangwechsel des Getriebes (48) auszuführen, wobei
die Steuervorrichtung (90) dazu konfiguriert ist, während der Schaltaktor gesteuert wird, um zu bewirken, dass die Antriebsklaue und die angetriebene Klaue einander näher sind, von dem gelösten Zustand zu dem eingreifenden Zustand, fortlaufend ohne temporären Stopp, den Kupplungsaktor (60) dahingehend zu steuern, die Kupplung (44) in den teilweise verbundenen Zustand zu bringen und die Bewegungsleistungsquellen-Drehmomenteinstellvorrichtung (80) dahingehend zu steuern, das Drehmoment der Bewegungsleistungsquelle (45) zu erhöhen, so dass das Drehmoment von der Bewegungsleistungsquelle (45) an die Antriebswelle (42) übertragen wird, wenn die Antriebsklaue und die angetriebene Klaue, die voneinander gelöst sind, später in Eingriff gebracht werden, wobei die Vorne-Hinten-Beschleunigung des Fahrzeugs (1), nachdem die Antriebsklaue und die angetriebene Klaue, die voneinander gelöst sind, in Eingriff gebracht sind, größer wird als die Vorne-Hinten-Beschleunigung des Fahrzeugs an dem Punkt, wenn der Gangwechselbefehl erzeugt wird.

5. Das Fahrzeug (1) gemäß einem der Ansprüche 1 bis 4, wobei in einem Fall, in dem ein Antriebszustand der Bewegungsleistungsquelle (45), wenn ein Schaltbefehl erzeugt wird, ein Zustand einer Ausgabe eines positiven Drehmoments ist, die Steuervorrichtung (90) dazu konfiguriert ist, während bewirkt wird, dass die Antriebsklaue und die angetriebene Klaue einander näher sind, von dem getrennten Zustand zu dem eingreifenden Zustand, den Kupplungsaktor (60) dahingehend zu steuern, die Kupplung (44) in den teilweise verbundenen Zustand zu bringen und die Bewegungsleistungsquellen-Drehmomenteinstellvorrichtung (80) dahingehend zu steuern, das Drehmoment der Bewegungsleistungsquelle (45) zu erhöhen, so dass das Drehmoment von der Bewegungsleistungsquelle (45) zu der Antriebswelle (42) übertragen wird, wenn die Antriebsklaue und die angetriebene Klaue, die voneinander gelöst sind, später in Eingriff gebracht werden, wobei die Vorne-Hinten-Beschleunigung des Fahrzeugs (1), nachdem die Antriebsklaue und die angetriebene Klaue, die voneinander gelöst sind, in Eingriff gebracht sind, größer wird als die Vorne-Hinten-Beschleunigung des Fahrzeugs (1) an dem Punkt, wenn der Gangwechselbefehl erzeugt wird.

6. Das Fahrzeug (1) gemäß einem der Ansprüche 1 bis 4, wobei,
wenn Antriebszustände der Bewegungsleistungsquelle (45) als ein Zustand mit niedriger Geschwindigkeit und niedrigem Drehmoment, wobei eine Geschwindigkeit oder ein Ausgangsdrehmoment der Bewegungsleistungsquelle (45) niedrig sind, und ein Zustand mit hoher Geschwindigkeit und hohem Drehmoment, wobei die Geschwindigkeit oder das Drehmoment relativ zu dem Zustand mit niedriger Geschwindigkeit und niedrigem Drehmoment hoch ist, definiert sind,
in einem Fall, in dem der Antriebszustand der Bewegungsleistungsquelle (45), wenn ein Hochschaltbefehl erzeugt wird, der Zustand mit hoher Geschwindigkeit und hohem Drehmoment ist, oder in einem Fall, in dem der Antriebszustand der Bewegungsleistungsquelle (45), wenn ein Abwärtsschaltbefehl erzeugt wird, ein Zustand einer Ausgabe eines positiven Drehmoments ist, die Steuervorrichtung (90) dazu konfiguriert, während bewirkt wird, dass die Antriebsklaue und die angetriebene Klaue einander näher sind, von dem getrennten Zustand zu dem eingreifenden Zustand, den Kupplungsaktor (60) dahingehend zu steuern, die Kupplung (44) in den teilweise verbundenen Zustand zu bringen, und die Bewegungsleistungsquellen-Drehmomenteinstellvorrichtung (80) dahingehend zu steuern, das Drehmoment der Bewegungsleistungsquelle (45) zu erhöhen, so dass das Drehmoment von der Bewegungsleistungsquelle (45) an die Antriebswelle(42) übertragen wird, wenn die Antriebsklaue und die angetriebene Klaue, die voneinander gelöst sind, später in Eingriff gebracht werden, wobei die Vorne-Hinten-Beschleunigung des Fahrzeugs (1), nachdem die Antriebsklaue und die angetriebene Klaue, die voneinander gelöst sind, in Eingriff gebracht sind, größer wird als die Vorne-Hinten-Beschleunigung des Fahrzeugs an dem Punkt, wenn der Gangwechselbefehl erzeugt wird.

7. Das Fahrzeug (1) gemäß einem der Ansprüche 1 bis 6, wobei die Steuervorrichtung (90) dazu konfiguriert ist, beim Lösen der Antriebsklaue und der angetriebenen Klaue gemäß einer Erzeugung des Gangwechselbefehls, die Bewegungsleistungsquellen-Drehmomenteinstellvorrichtung (80) dahingehend zu steuern, das Drehmoment der Bewegungsleistungsquelle (45) zu reduzieren, und während bewirkt wird, dass die Antriebsklaue und die angetriebene Klaue einander näher sind, von dem getrennten Zustand zu dem eingreifenden Zustand, den Kupplungsaktor (60) dahingehend zu steuern, die Kupplung (44) in den teilweise verbundenen Zustand zu bringen, und die Bewegungsleistungsquellen-Drehmomenteinstellvorrichtung (80) dahingehend zu steuern, das Drehmoment der Bewegungsleistungsquelle (45) zu erhöhen, so dass das Drehmoment von der Bewegungsleistungsquelle (45) zu der Antriebswelle (42) übertragen wird, wenn die Antriebsklaue und die angetriebene Klaue, die voneinander gelöst sind, später in Eingriff gebracht werden, wobei die Vorne-Hinten-Beschleunigung des Fahrzeugs (1), nachdem die Antriebsklaue und die angetriebene Klaue, die voneinander gelöst sind, in Eingriff gebracht sind, größer wird als die Vorne-Hinten-Beschleunigung des Fahrzeugs (1) an dem Punkt, wenn der Gangwechselbefehl erzeugt wird.

## Revendications

1. Véhicule (1) équipé d'un dispositif de changement de vitesse à embrayage à crabots (50) comprenant :
un embrayage (44) qui est configuré pour, dans un état complètement connecté, transmettre un couple depuis une source de puissance motrice (45) vers un arbre principal (41) lorsqu'un élément de friction d'embrayage est pressé, dans un état partiellement connecté, transmettre le couple lorsque l'élément de friction d'embrayage est pressé avec une force de pression inférieure à une force de pression à l'état complètement connecté, et dans un état déconnecté, interrompre la transmission du couple depuis la source de puissance motrice (45) vers l'arbre principal (41) ;
un actionneur d'embrayage (60) qui est configuré pour commander l'embrayage (44) et modifie l'état de l'embrayage (44) ;
une transmission (48) qui est configurée pour engager un crabot d'entraînement et un crabot entraîné en rapprochant le crabot d'entraînement et le crabot entraîné l'un de l'autre et pour désengager le crabot d'entraînement et le crabot entraîné en éloignant le crabot d'entraînement et le crabot entraîné l'un de l'autre, et ainsi changer les engrenages qui sont configurés pour transmettre le couple entre l'arbre principal (41) et un arbre d'entraînement (42) ;
un dispositif de réglage du couple de la source de puissance motrice (80) qui est configuré pour régler le couple de la source de puissance motrice (45) ; et
un dispositif de commande (90) qui est configuré pour commander l'actionneur d'embrayage (60) et le dispositif de réglage du couple de la source de puissance motrice (80), **caractérisé en ce que**
le dispositif de commande (90) est configuré pour, tout en rapprochant le crabot d'entraînement et le crabot entraîné l'un de l'autre d'un état désengagé à un état engagé, commander l'actionneur d'embrayage (60) de manière à mettre l'embrayage (44) à l'état partiellement connecté et commander le dispositif de réglage du couple de la source de puissance motrice (80) de manière à augmenter le couple de la source de puissance motrice (45), de sorte que le couple est transmis de la source de puissance motrice (45) à l'arbre d'entraînement (42) lorsque le crabot d'entraînement et le crabot entraîné désengagés sont ensuite engagés, de sorte qu'une accélération avant-arrière du véhicule (1) après l'engagement du crabot d'entraînement et du crabot entraîné désengagés devient supérieure à une accélération avant-arrière du véhicule (1) au moment où une commande de changement de vitesse est générée.

2. Véhicule (1) selon la revendication 1, dans lequel le dispositif de commande (90) est configuré pour, après l'engagement du crabot d'entraînement et du crabot entraîné, commander l'actionneur d'embrayage (60) de manière à maintenir l'état partiellement connecté de l'embrayage (44) et commander le dispositif de réglage du couple de la source de puissance motrice (80) de manière à conserver le couple accru de la source de puissance motrice (45), de sorte que l'accélération avant-arrière du véhicule (1) après l'engagement du crabot d'entraînement et du crabot entraîné désengagés est maintenue dans un état qui est supérieur à l'accélération avant-arrière du véhicule au moment où la commande de changement de vitesse est générée.

3. Véhicule (1) selon la revendication 1 ou 2, dans lequel le dispositif de commande (90) est configuré pour, après l'engagement de crabot d'entraînement et du crabot entraîné, commander l'actionneur d'embrayage (60) de manière à maintenir l'état partiellement connecté de l'embrayage (44), et puis mettre l'embrayage (44) à l'état complètement connecté et commander le dispositif de réglage du couple de la source de puissance motrice (80) de manière à maintenir le couple accru de la source de puissance motrice (45), puis à augmenter davantage le couple de la source de puissance motrice (45), de sorte qu'une vitesse du véhicule qui a diminué après la génération de la commande de changement de vitesse est augmentée par l'accélération avant-arrière accrue du véhicule (1) après l'engagement du crabot d'entraînement et du crabot entraîné désengagés.

4. Véhicule (1) selon l'une quelconque des revendications 1 à 3, dans lequel le dispositif de changement de vitesse à embrayage à crabots (50) comprend un actionneur de changement de vitesse (70) qui est commandé par le dispositif de commande (90) et est configuré pour effectuer un changement de vitesse de la transmission (48), dans lequel
le dispositif de commande (90) est configuré pour, tout en commandant l'actionneur d'embrayage de manière à rapprocher le crabot d'entraînement et le crabot entraîné l'un de l'autre de l'état désengagé à l'état engagé continuellement sans un arrêt temporaire, commander l'actionneur d'embrayage (60) de manière à mettre l'embrayage (44) à l'état partiellement connecté et commander le dispositif de réglage du couple de la source de puissance motrice (80) de manière à augmenter le couple de la source de puissance motrice (45), de sorte que le couple est transmis de la source de puissance motrice (45) à l'arbre d'entraînement (42) lorsque le crabot d'entraînement et le crabot entraîné désengagés sont ensuite engagés, de sorte que l'accélération avant-arrière du véhicule (1) après l'engagement du crabot d'entraînement et du crabot entraîné désengagés devient supérieure à l'accélération avant-arrière du véhicule au moment où la commande de changement de vitesse est générée.

5. Véhicule (1) selon l'une quelconque des revendications 1 à 4, dans lequel, dans un cas où un état d'entraînement de la source de puissance motrice (45) lorsqu'une commande de changement de vitesse est générée est un état d'émission d'un couple positif, le dispositif de commande (90) est configuré pour, tout en rapprochant le crabot d'entraînement et le crabot entraîné l'un de l'autre de l'état désengagé à l'état engagé, commander l'actionneur d'embrayage (60) de manière à mettre l'embrayage (44) à l'état partiellement connecté et commander le dispositif de réglage du couple de la source de puissance motrice (80) de manière à augmenter le couple de la source de puissance motrice (45), de sorte que le couple est transmis de la source de puissance motrice (45) à l'arbre d'entraînement (42) lorsque le crabot d'entraînement et le crabot entraîné désengagés sont ensuite engagés, de sorte que l'accélération avant-arrière du véhicule (1) après l'engagement du crabot d'entraînement et du crabot entraîné désengagés devient supérieure à l'accélération avant-arrière du véhicule (1) au moment où la commande de changement de vitesse est générée.

6. Véhicule (1) selon l'une quelconque des revendications 1 à 4, dans lequel
lorsque les états d'entraînement de la source de puissance motrice (45) sont définis comme un état à faible vitesse et faible couple où une vitesse ou un couple de sortie de la source de puissance motrice (45) est faible, et un état à vitesse élevée et couple élevé où la vitesse ou le couple est élevé par rapport à celui de l'état à faible vitesse et faible couple,
dans un cas où l'état d'entraînement de la source de puissance motrice (45) lorsqu'une commande de passage à la vitesse supérieure est générée est l'état à grande vitesse et à couple élevé ou dans un cas où l'état d'entraînement de la source de puissance motrice (45) lorsqu'une commande de passage à la vitesse inférieure est générée est un état de production d'un couple positif, le dispositif de commande (90) est configuré pour, tout en rapprochant le crabot d'entraînement et le crabot entraîné l'un de l'autre de l'état désengagé à l'état engagé, commander l'actionneur d'embrayage (60) de manière à mettre l'embrayage (44) à l'état partiellement connecté et commander le dispositif de réglage du couple de la source de puissance motrice (80) de manière à augmenter le couple de la source de puissance motrice (45), de telle sorte que le couple soit transmis de la source de puissance motrice (45) à l'arbre d'entraînement (42) lorsque le crabot d'entraînement et le crabot entraîné désengagés sont ensuite engagés, de sorte que l'accélération avant-arrière du véhicule (1) après l'engagement du crabot d'entraînement et du crabot entraîné désengagés devient supérieure à l'accélération avant-arrière du véhicule au moment où la commande de changement de vitesse est générée.

7. Véhicule (1) selon l'une quelconque des revendications 1 à 6, dans lequel le dispositif de commande (90) est configuré pour, lors du désengagement du crabot d'entraînement et du crabot entraîné en fonction de la génération de la commande de changement de vitesse, commander le dispositif de réglage du couple de la source de puissance motrice (80) de manière à réduire le couple de la source de puissance motrice (45), et pour, tout en rapprochant le crabot d'entraînement et le crabot entraîné l'un de l'autre de l'état désengagé à l'état engagé, commander l'actionneur d'embrayage (60) de manière à mettre l'embrayage (44) à l'état partiellement connecté et commander le dispositif de réglage du couple de la source de puissance motrice (80) de manière à augmenter le couple de la source de puissance motrice (45), de sorte que le couple est transmis de la source de puissance motrice (45) à l'arbre d'entraînement (42) lorsque le crabot d'entraînement et le crabot entraîné désengagés sont ensuite engagés, de sorte que l'accélération avant-arrière du véhicule (1) après l'engagement du crabot d'entraînement et du crabot entraîné désengagés devient supérieure à l'accélération avant-arrière du véhicule (1) au moment où la commande de changement de vitesse est générée.
